(19) Europäisches Patentamt / European Patent Office / Office européen des brevets

(11) **EP 4 459 538 A1**

(12) **EUROPEAN PATENT APPLICATION**
published in accordance with Art. 153(4) EPC

(43) Date of publication:
**06.11.2024 Bulletin 2024/45**

(21) Application number: **22915540.3**

(22) Date of filing: **07.11.2022**

(51) International Patent Classification (IPC):
**G06Q 50/10** $^{(2012.01)}$     **G06Q 30/0201** $^{(2023.01)}$

(52) Cooperative Patent Classification (CPC):
**G06Q 30/0201; G06Q 50/10**

(86) International application number:
**PCT/JP2022/041310**

(87) International publication number:
**WO 2023/127307 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2021 JP 2021212406**

(71) Applicant: **Sony Group Corporation Tokyo 108-0075 (JP)**

(72) Inventor: **KAWAMURA, Kazuki Tokyo 108-0075 (JP)**

(74) Representative: **MFG Patentanwälte Meyer-Wildhagen Meggle-Freund Gerhard PartG mbB Amalienstraße 62 80799 München (DE)**

(54) **INFORMATION PROCESSING DEVICE, INFORMATION PROCESSING METHOD, AND PROGRAM**

(57) [Problem] Provided are an information processing apparatus, an information processing method, and a program capable of extracting a future trend in units of features of target content.

[Solution] The information processing apparatus including a control unit that acquires a distribution of features of a target content in a predetermined period, regarding target content, acquires a distribution of features in a prediction period on a basis of the distribution of the features in each the predetermined period, and compares a distribution of features in a current period with the distribution of the features in the prediction period to extract a section satisfying a predetermined condition as a feature trend in the prediction period.

*FIG. 1*

## Description

TECHNICAL FIELD

The present disclosure relates to an information processing apparatus, an information processing method, and a program.

BACKGROUND ART

In recent years, attempts have been made to analyze and predict trends using various information disclosed on the Internet.

For example, Patent Document 1 described below proposes a technique for determining which period of trend transition times (dawn period, epidemic period, reaction period, recovery period, stability period) is appropriate, on the basis of frequency of appearance of a keyword for identifying a period, from a sentence related to a specific theme, and furthermore predicting when a next period after the determined period will arrive.

CITATION LIST

PATENT DOCUMENT

Patent Document 1: Japanese Patent Application Laid-Open No. 2012-38135

SUMMARY OF THE INVENTION

PROBLEMS TO BE SOLVED BY THE INVENTION

However, the trend transition times do not necessarily change in a determined order, and it has been difficult for the technology disclosed in Patent Document 1 to sufficiently analyze and predict a complicated trend change. In addition, in the technology disclosed in Patent Document 1, a target of trend prediction is narrowed down to a somewhat large theme, and trend prediction targeting detailed features is not assumed.

Therefore, the present disclosure proposes an information processing apparatus, an information processing method, and a program capable of extracting a future trend in units of features of a target content.

SOLUTIONS TO PROBLEMS

According to the present disclosure, there is proposed an information processing apparatus including a control unit that acquires a distribution of features of a target content in a predetermined period, regarding target content, acquires a distribution of features in a prediction period on a basis of the distribution of the features in each the predetermined period, and compares a distribution of features in a current period with the distribution of the features in the prediction period to extract a section satisfying a predetermined condition as a feature trend in the prediction period.

According to the present disclosure, there is proposed an information processing method causing a processor to perform the steps of: acquiring a distribution of features of a target content in a predetermined period, regarding target content; acquiring a distribution of features in a prediction period on a basis of the distribution of the features in each the predetermined period; and comparing a distribution of features in a current period with the distribution of the features in the prediction period to extract a section satisfying a predetermined condition as a feature trend in the prediction period.

According to the present disclosure, there is proposed a program causing a computer to function as a control unit that acquires a distribution of features of a target content in a predetermined period, regarding target content; acquires a distribution of features in a prediction period on a basis of the distribution of the features in each the predetermined period; and compares a distribution of features in a current period with the distribution of the features in the prediction period to extract a section satisfying a predetermined condition as a feature trend in the prediction period.

BRIEF DESCRIPTION OF DRAWINGS

Fig. 1 is a diagram illustrating an outline of a trend extraction system according to an embodiment of the present disclosure.
Fig. 2 is a block diagram illustrating an example of a configuration of an information processing apparatus according to the present embodiment.
Fig. 3 is a diagram illustrating an example in which music features (for example, "tempo") of a popular song in a predetermined period are expressed by frequency distribution according to the present embodiment.
Fig. 4 is a diagram illustrating generation (learning) of a prediction model of a music feature distribution in a case of a window size 3 according to the present embodiment.
Fig. 5 is a flowchart illustrating an example of an overall flow of trend extraction processing according to the present embodiment.
Fig. 6 is a flowchart illustrating an example of a flow of model generation processing according to the present embodiment.
Fig. 7 is a diagram illustrating a display screen example of music platform selection and the like according to the present embodiment.
Fig. 8 is a diagram illustrating an example of generation of a time-series prediction model in which all music features are input and output in a connected form according to the present embodiment.
Fig. 9 is a flowchart illustrating an example of a flow of feature trend extraction processing according to the present embodiment.

Fig. 10 is a diagram illustrating exclusion of music features having no difference according to the present embodiment.

Fig. 11 is a diagram illustrating extraction of a feature trend according to the present embodiment according to the present embodiment.

Fig. 12 is a flowchart illustrating an example of a flow of artist extraction processing according to the present embodiment.

Fig. 13 is a diagram illustrating a case where a feature trend is displayed in a one-dimensional grid according to the present embodiment.

Fig. 14 is a diagram illustrating a display screen example including display of the feature trend on a one-dimensional grid and display of discovered artists and music according to the present embodiment.

Fig. 15 is a diagram illustrating an example of a distribution (two-dimensional distribution) of two types of music features according to a modification of the present embodiment.

Fig. 16 is a diagram illustrating a screen example in which each of two types of feature trends is displayed in a two-dimensional grid according to a modification of the present embodiment.

Fig. 17 is a diagram illustrating an example of a screen having an additional function according to a modification of the present embodiment.

Fig. 18 is a diagram illustrating extraction of a feature trend according to a modification of the present embodiment.

Fig. 19 is a diagram illustrating a modification of display of a feature trend of the present embodiment.

Fig. 20 is a diagram illustrating an example of a feature distribution in an application example to fashion according to the present embodiment.

Fig. 21 is a diagram illustrating dimension reduction in the application example to the fashion according to the present embodiment.

Fig. 22 is a diagram illustrating extraction of a feature trend in the application example to the fashion according to the present embodiment.

Fig. 23 is a diagram illustrating extraction of the feature trend in a case where a dimension reduction algorithm is used in the application example to the fashion according to the present embodiment.

MODE FOR CARRYING OUT THE INVENTION

Hereinafter, preferred embodiments of the present disclosure will be described in detail with reference to the accompanying drawings. Note that, in the present specification and drawings, components having substantially the same functional configuration are denoted by the same reference signs, and redundant description is omitted.

Further, a description will be given in the following order.

1. Overview of trend extraction system
2. Example configurations
3. Operation processing
3-1. Overall flow
3-2. Model generation processing
3-3. Prediction processing of distribution of future music features
3-4. Feature trend extraction processing
3-5. Artist extraction processing
4. Display screen example
4-1. Display of feature trend in one-dimensional grid
4-2. Display of feature trend in one-dimensional grid and display of discovered artist and music
5. Modification
5-1. Multi-dimensional display of feature trends
5-2. Additional function
6. Application example to other than music
6-1. Fashion
6-2. Design
6-3. Image and symbols
7. Supplement

<1. Overview of trend extraction system>

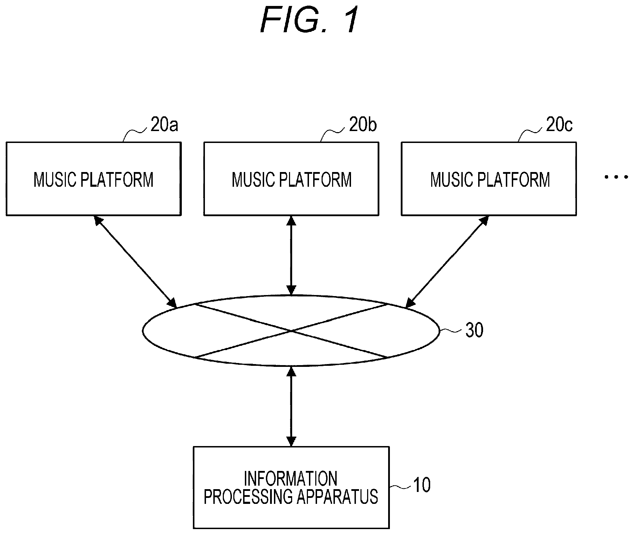

Fig. 1 is a diagram illustrating an outline of a trend extraction system according to an embodiment of the present disclosure. As illustrated in Fig. 1, the trend extraction system according to the present embodiment causes an information processing apparatus 10 to analyze data regarding target content and extract a future trend. Content targeted for trend extraction is assumed to be content in various fields such as music, fashion, books, moving images, photographs, and so on. In the present embodiment, trend extraction of music will be described as an example.

The data regarding the target content may be acquired from an external server that stores the data regarding the target content. For example, the information processing apparatus 10 communicably connects to a plurality of music platforms 20 (20a to 20c ⋯) through a network 30, and can receive data regarding music being handled in each music platform 20 as data regarding the target content. The music platform 20 is an example of a data sharing platform where various content (data) is shared by a large number of users. As the music platform 20 according to the present embodiment, for example, various social networking services (SNSs), video and audio distribution services, company music platforms used by each company, and the like are assumed. More specifically, in recent years, YouTube (registered trademark) of a moving image SNS, Twitter (registered trademark) of a short sentence SNS, Spotify (registered trademark) of a music streaming service, Instagram (registered trademark) of a photo SNS, TikTok (registered trademark) of a short movie SNS, and the like are exemplified as the music platform 20, but the present embodiment is not limited thereto.

The information processing apparatus 10 may analyze popular songs (for example, the number of plays is equal to or greater than a threshold) on the designated music platform 20 to extract a future trend in the music platform 20.

Here, even if analysis is simply performed on a large theme such as a genre of music, it is difficult to sufficiently analyze a transition of a complicated trend.

Therefore, in the trend extraction system according to the present disclosure, analysis is performed in units of features of target content, and a trend is extracted.

The analysis in the feature unit of the target content means that analysis is performed for each feature that is an element that defines the content. The content may have a number of features. Which feature is used for analysis may be set in the information processing apparatus 10 in advance.

For example, in a case where the content is music (music), examples of the feature (music feature) include tempo (speed of music, Beats Per Minute (BPM)), rhythm, melody, key (musical scale), beat, length of a song, sound pressure (for example, average loudness and gaudiness of an entire song), and the like. In addition, new features such as danceability (index indicating whether the music is a song for dance calculated on the basis of tempo, rhythm, beat, and the like), energy (index indicating strength calculated on the basis of the loudness and speed of sound), an acoustic degree (index indicating whether or not a song is acoustic), and a liveness (index indicating a high possibility of live recording in which presence or absence of a voice of an audience is detected) can be calculated on the basis of the plurality of features. These characteristics may be calculated on the basis of data regarding music acquired by the information processing apparatus 10 from the music platform 20, or may be calculated in the music platform 20 in advance.

The information processing apparatus 10 according to the present embodiment extracts content (popular content) satisfying a predetermined condition indicating popularity or attention as target content, uses data of the target content as learning data, and generates a model for predicting future feature distribution using a prescribed machine learning model. The predetermined condition indicating popularity or attention may be, for example, that the number of times of reproduction in a predetermined period is equal to or larger than a threshold, or may be that music is arranged in descending order of the number of times of reproduction in a predetermined period and enters top several% (for example, 10%, 7%, 5%, and the like). The information processing apparatus 10 analyzes a feature distribution of target content (popular content) satisfying a predetermined condition (that is, acquires frequency distribution of each feature), and uses the feature distribution as learning data. Next, the information processing apparatus 10 generates a model for predicting a future feature distribution (frequency distribution of features) using the learning data (feature distribution in each predetermined period) and predicts the future feature distribution. Then, the information processing apparatus 10 compares the current frequency distribution with the future frequency distribution for each feature, and extracts, as a trend (feature trend), a section (for example, a section of tempo 80 to 90, a section of danceability 0.5 to 0.65, a section of energy 0.2 to 0.25, and the like) in which each feature is not currently popular but will become popular in the future.

As described above, in the present embodiment, trend extraction is performed on a feature-by-feature basis, and thus, it is possible to more precisely and sufficiently analyze a transition of a complicated trend and to more accurately extract the trend.

The outline of the trend extraction system according to the embodiment of the present disclosure has been described above.

<2. Configuration Example>

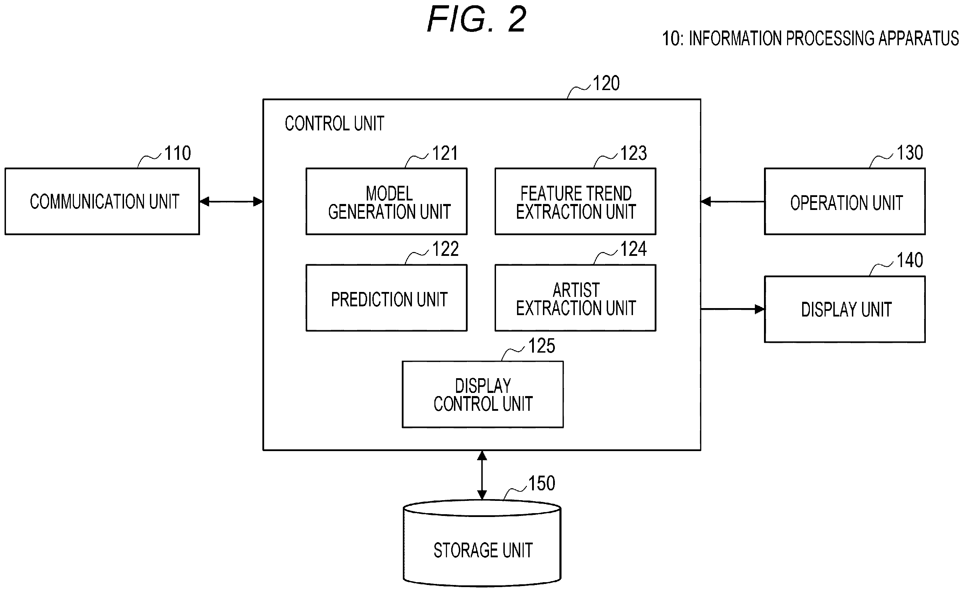

Fig. 2 is a block diagram illustrating an example of a configuration of the information processing apparatus 10 according to the present embodiment. As illustrated in Fig. 2, the information processing apparatus 10 includes a communication unit 110, a control unit 120, an operation unit 130, a display unit 140, and a storage unit 150.

(Communication Unit 110)

The communication unit 110 transmits and receives data to and from an external device in a wired or wireless manner. The communication unit 110 is communicably connected to the music platform 20 using, for example, a wired/wireless local area network (LAN), Wi-Fi (registered trademark), Bluetooth (registered trademark), a mobile communication network (Long Term Evolution (LTE), fourth generation mobile communication system (4G), and fifth generation mobile communication system (5G)), or the like.

(Control Unit 120)

The control unit 120 functions as an arithmetic processing device and a control device, and controls the overall operation in the information processing apparatus 10 according to various programs. The control unit 120 is realized by, for example, an electronic circuit such as a central processing unit (CPU) or a microprocessor. In addition, the control unit 120 may include a read only memory (ROM) that memorizes programs, computation parameters, and the like to be used, and a random access memory (RAM) that temporarily memorizes parameters and the like that change appropriately.

Furthermore, the control unit 120 according to the present embodiment performs machine learning using the data acquired from the music platform 20 as learning data, predicts a distribution of future music features using the generated learned model, and extracts a trend (feature trend) of the music features. Furthermore, the control unit 120 extracts music and an artist that match the extracted feature trend, and presents the music and the artist to the display unit 140 together with the feature trend. Hereinafter, a specific description will be given.

The control unit 120 functions as a model generation unit 121, a prediction unit 122, a feature trend extraction unit 123, an artist extraction unit 124, and a display control unit 125.

(1) Model generation

The model generation unit 121 acquires predetermined data from the music platform 20, performs machine learning, and generates a model for predicting the distribution of future music features.

Specifically, first, the model generation unit 121 acquires data regarding music such as a song name, an album name, an artist name, a release date, the number of times of reproduction (reproduction history), and a feature (music feature amount) of each piece of music from the music platform 20 designated by the user, and prepares a data set of popular music (music with high attention degree) for each predetermined period. The user can select, from the operation unit 130, the music platform 20 on which the user desires to predict a trend and extract an artist. One music platform 20 may be designated, or a plurality of music platforms may be designated. The model generation unit 121 may acquire data regarding each piece of music from a plurality of music platforms 20 designated by the user, and prepare a data set of popular music (music with high attention degree) for each predetermined period.

A popular song (a song with a high degree of attention) is a song that satisfies a condition indicating popularity (or attention). The condition indicating popularity (or attention) may be, for example, that the number of times of reproduction in a predetermined period exceeds a threshold, or may be, in consideration of a change in the number of users, for example, that music is arranged in descending order of the number of times of reproduction in a predetermined period and enters a high predetermined number % (for example, 10%, 7%, 5%, and the like). Note that the condition indicating popularity is not limited to the condition regarding the number of times of reproduction. For example, an increase rate of the number of downloads, the number of favorite registrations, the number of times of reproduction, and the like, viewer evaluation, and the like may be used. In addition, the predetermined period may be one month, three months, half a year, or one year. Note that a data set for each predetermined period of data regarding music acquired from each music platform 20 may be stored in the storage unit 150 in advance. In this case, the model generation unit 121 can extract, from the storage unit 150, a data set of popular songs (music satisfying a condition indicating popularity) for each predetermined period in the designated music platform 20.

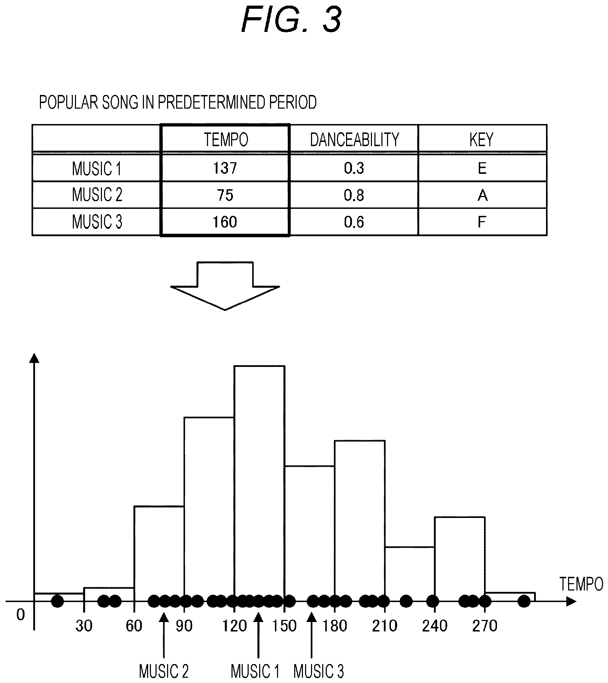

Next, the model generation unit 121 acquires a frequency distribution indicating the distribution of the music features of the popular song on the basis of the data set of the popular song in the predetermined period. That is, the model generation unit 121 models each music feature in frequency distribution every predetermined period. As described above, examples of the music features include tempo, rhythm, melody, key, beat, length of a song, sound pressure, danceability, energy, an acoustic degree, and the like. In order to suppress the influence of the difference in the number of pieces of music included in each predetermined period, the model generation unit 121 normalizes the sum of the number of distributions of each music feature in each predetermined period to be 1. Fig. 3 is a diagram illustrating an example in which music features (for example, "tempo") of a popular song in a predetermined period according to the present embodiment are expressed by frequency distribution. The model generation unit 121 acquires a frequency distribution of each music feature for each predetermined period.

Subsequently, the model generation unit 121 uses the frequency distribution of each music feature in each predetermined period as learning data, and generates (learns) a model for predicting the frequency distribution of the future music feature using prescribed machine learning. In the present embodiment, as the prescribed machine learning, for example, an arbitrary machine learning method such as Feedforward Neural Network (FNN), Long Short Term Memory (LSTM), and Transformer which are neural network (NN)-based models, or ARIMA (Auto-Regressive Integrated Moving Average) and VAR (Vector Autoregressive) which are autoregressive models, and the like is used. These models are time-series prediction models that can predict a future distribution from a plurality of consecutive past distributions. How many past distributions (distributions of how many periods) are used is set as a hyperparameter (window size) and is appropriately determined for each model.

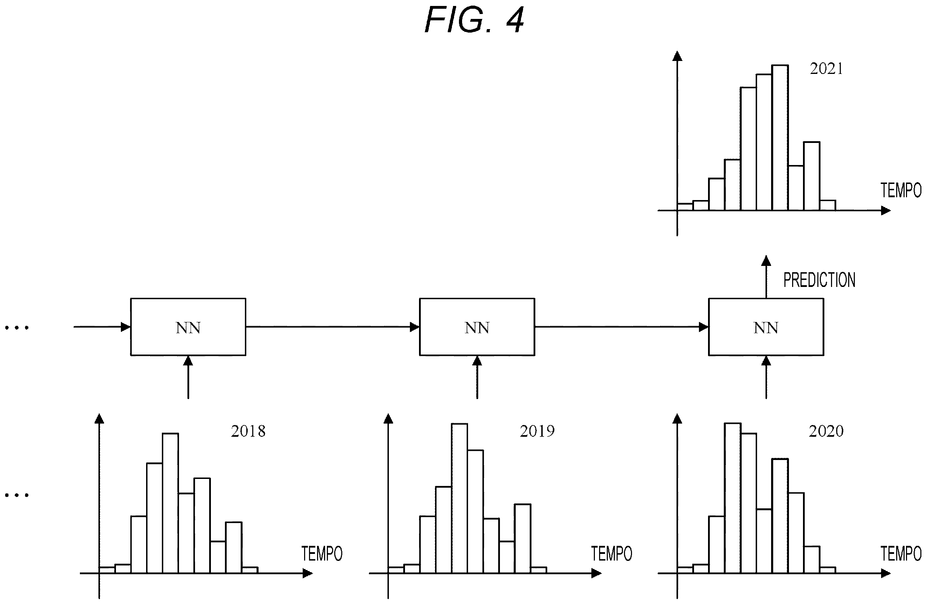

For example, when the music feature distribution in each year of 2010 to 2021 is used as learning data to learn a model for predicting the music feature distribution in 2022, in a case where the window size is determined to be 3, the model is learned to predict the music feature distribution in 2013 from the music feature distribution in 2010 to 2012, predict the music feature distribution in 2014 from the music feature distribution in 2011 to 2013, sequentially repeat the prediction, and predict the music feature distribution in 2021 from the music feature distribution in 2018 to 2020, as shown in Fig. 4.

(2) Prediction of future music features

The prediction unit 122 predicts the distribution (frequency distribution) of the future music feature using the generated model (learned model). The period for prediction (prediction period) can be designated by the user through the operation unit 130.

(3) Extraction of feature trend

The feature trend extraction unit 123 compares the frequency distribution of the current music feature with the frequency distribution of the predicted (future) music feature, and extracts a section satisfying a predetermined condition as a trend (feature trend). More specifically, the predetermined condition means that a value is lower than a threshold in the frequency distribution in the current period, and the value is higher than the threshold in the (predicted future) frequency distribution in the prediction period. That is, the section (feature trend) satisfying the predetermined condition is a section in which the value is lower than the threshold in the frequency distribution in the current period and the value is higher than the threshold in the frequency distribution (predicted future) in the prediction period. A section in which the value is higher than the threshold in the frequency distribution in the current period is excluded because the section is an already popular section. As a result, a feature section that is not currently popular but will become popular in the future can be extracted as a feature trend.

The feature trend extraction unit 123 can extract a feature trend in the prediction period for each music feature (for example, tempo: 90 to 100, key: C, danceability: 0.5 to 0.65, and 0.75 to 0.80, energy: 0.2 to 0.25, sense of live: 0.45 to 0.50, acoustic degree: 0.30 to 0.35, and the like). Note that, when extracting a feature trend, the feature trend extraction unit 123 can reduce burden of the extraction processing by excluding in advance features having almost no difference (distance) between the frequency distribution of the current music feature and the frequency distribution of the future music feature (distance is equal to or less than a predetermined value).

(4) Extraction of artist

The artist extraction unit 124 extracts (discovers) an artist of music matching some feature trends from the designated music platform 20. For example, in the case of targeting a tempo, a key, and energy, the artist extraction unit 124 extracts music in which the tempo is 90 to 100, the key is C, and the energy is 0.2 to 0.25, which are extracted feature trends, and finds an artist who has created the music. Note that the music platform 20 that extracts the artist and the music platform 20 used for trend extraction may be the same or different. Furthermore, the artist information corresponding to the music platform 20 may be stored in the storage unit 150 in advance. Furthermore, a plurality of music platforms 20 may be used for trend extraction and artist extraction.

(5) Display control

The display control unit 125 performs control to display the feature trend extracted by the feature trend extraction unit 123 and the artist (and music) extracted by the artist extraction unit 124 on the display unit 140. Furthermore, the display control unit 125 may display a feature trend used for artist extraction among the feature trends extracted by the feature trend extraction unit 123. Furthermore, the display control unit 125 may display only the extracted feature trend. Furthermore, the display control unit 125 may display the extracted feature trends in descending order of the difference (distance) between the frequency distribution of the current music feature and the frequency distribution of the future music feature.

Furthermore, the display control unit 125 may also display the music features of the extracted music. In addition, the display control unit 125 may highlight a portion matching the feature trend among the music features of the extracted music.

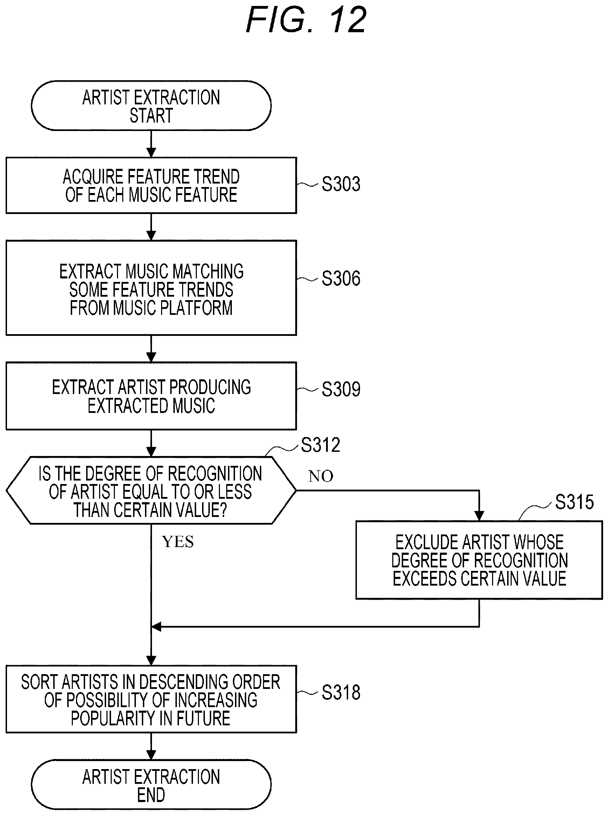

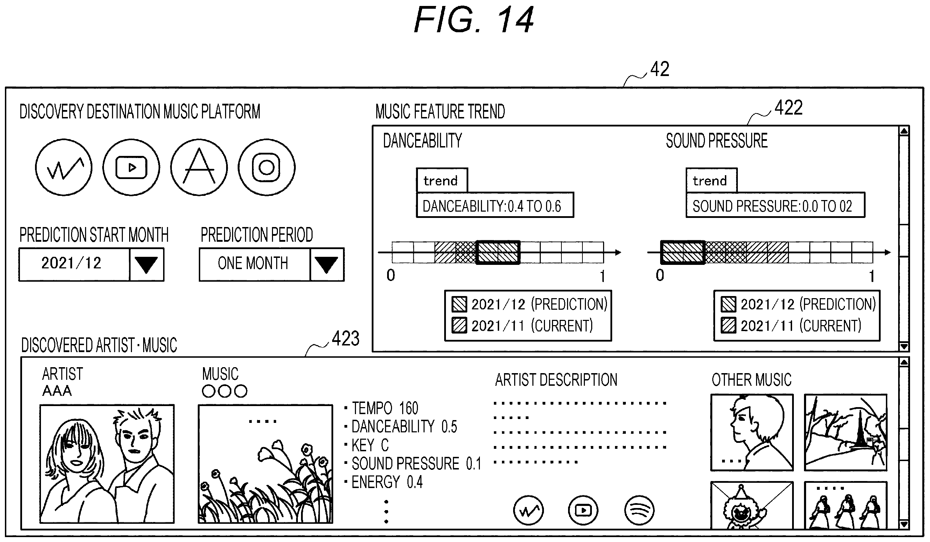

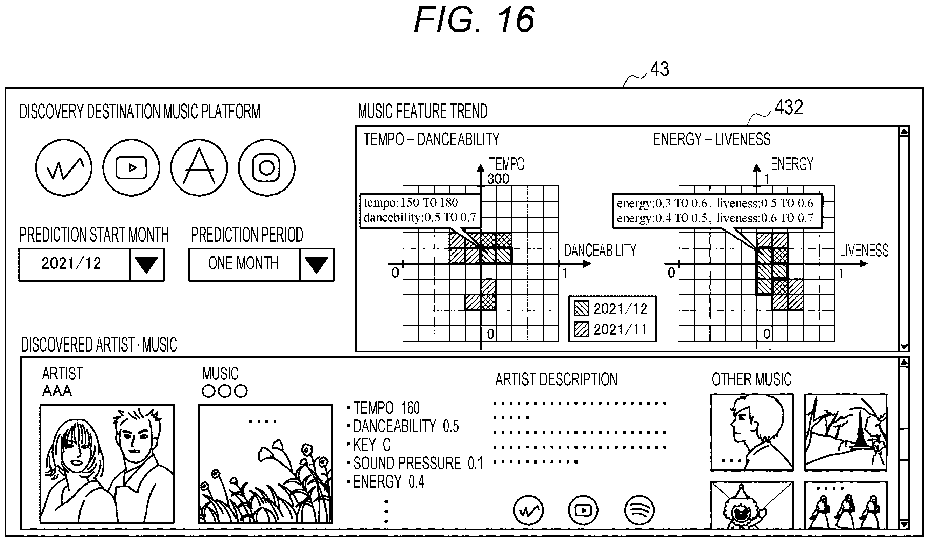

Furthermore, the display control unit 125 may display the feature trend as a numerical value, or may display the feature trend as a one-dimensional grid or a two-dimensional grid. Furthermore, when displaying in a one-dimensional or two-dimensional grid, the display control unit 125 may emphasize and display a difference from a section (currently popular section) higher than a threshold in frequency distribution of the current music feature. A display screen example of the feature trend and the extracted artist will be described later with reference to Fig. 12 (display of the feature trend on the one-dimensional grid), Fig. 14 (display of the feature trend on the one-dimensional grid and display of the artist and music), Fig. 16 (display of the feature trend on the two-dimensional grid), and the like.

(Operation unit 130)

The operation unit 130 receives an operation input by the user and outputs input information to the control unit 120. The operation unit 130 may be a keyboard, a mouse, a touch panel, a controller, a voice input unit, or the like.

(Display unit 140)

The display unit 140 has a function of displaying an operation input screen, a feature trend extraction result screen, and the like under the control of the display control unit 125. For example, the display unit 140 may be a display panel such as a liquid crystal display (LCD) or an organic electro luminescence (EL) display.

(Storage Unit 150)

The storage unit 150 is implemented by a read only memory (ROM) that stores programs, operation parameters, and the like to be used for processing of the control unit 120, and a random access memory (RAM) that temporarily stores parameters and the like that change as appropriate. For example, the storage unit 150 according to the present embodiment may appropriately store data (music name, number of times of reproduction, music feature amount, and the like) regarding music corresponding to each music platform 20, a learned model, an extracted feature trend, artist information corresponding to each music platform 20, and the like.

Although the configuration of the information processing apparatus 10 has been specifically described above, the configuration of the information processing apparatus 10 according to the present disclosure is not limited to the example illustrated in Fig. 2. For example, the information processing apparatus 10 may be implemented by a plurality of devices. Furthermore, the operation unit 130 and the display unit 140 may be integrated. Furthermore, the control unit 120 and the storage unit 150 of the information processing apparatus 10 may be realized by a server (cloud server, edge server, etc.), and the operation unit 130 and the display unit 140 may be realized by a user terminal connected to the server through a network. Furthermore, each function of the control unit 120 may be implemented by being distributed to a server and a user terminal.

<3. Operation processing>

Next, a flow of trend extraction processing according to the present embodiment will be specifically described with reference to the drawings.

(3-1. Overall flow)

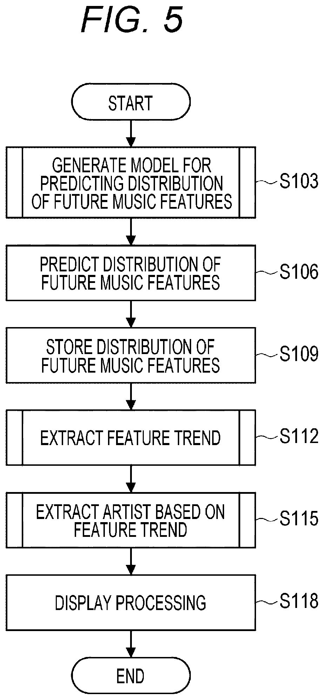

Fig. 5 is a flowchart illustrating an example of an overall flow of trend extraction processing according to the present embodiment.

First, as illustrated in Fig. 5, the model generation unit 121 of the information processing apparatus 10 uses data sets of a large number of popular songs corresponding to the designated music platform 20 to generate (learn) a model for predicting a distribution (frequency distribution) of future music features (Step S103). Note that the model generation unit 121 generates a model for each music feature.

Next, the prediction unit 122 predicts the distribution of the future music feature using the generated model (learned model) (Step S105). Note that the prediction unit 122 predicts distribution of future music features for each music feature.

Next, the prediction unit 122 stores the distribution of the predicted future music features in the storage unit 150 (Step S109).

Subsequently, the feature trend extraction unit 123 compares the distribution of the current music features with the predicted distribution of the future music features, and extracts a trend (feature trend) of the music features (Step S112). The extracted feature trend is stored in the storage unit 150. Note that the feature trend extraction unit 123 extracts the feature trend for each music feature.

Next, the artist extraction unit 124 extracts an artist matching the extracted feature trend (Step S115). Specifically, the artist extraction unit 124 extracts an artist who has produced (alternatively, some association such as playing or singing is performed) music that matches one or more predetermined feature trends from the artist information corresponding to the designated music platform 20. The feature trend to be used may be specified by the user, or a feature trend of a music feature having a large distance (difference) between the future distribution and the current distribution may be used. In addition, the feature trend to be used may be one or a plurality of feature trends to be used.

Then, the display control unit 125 performs processing of displaying the extracted feature trend, music, and artist on the display unit 140 (Step S118).

An example of the overall flow of the feature trend extraction processing according to the present embodiment has been described above. Note that the operation process illustrated in Fig. 5 is an example, and part of the process may be performed in different orders or in parallel, or may not be performed. For example, model generation (learning) may be performed in advance. Furthermore, the information processing apparatus 10 may only extract a feature trend and present the feature trend to the user.

Next, the model generation processing, the prediction processing of distribution of the future music features, the feature trend extraction processing, and the artist extraction processing will be described more specifically.

(3-2. Model generation processing)

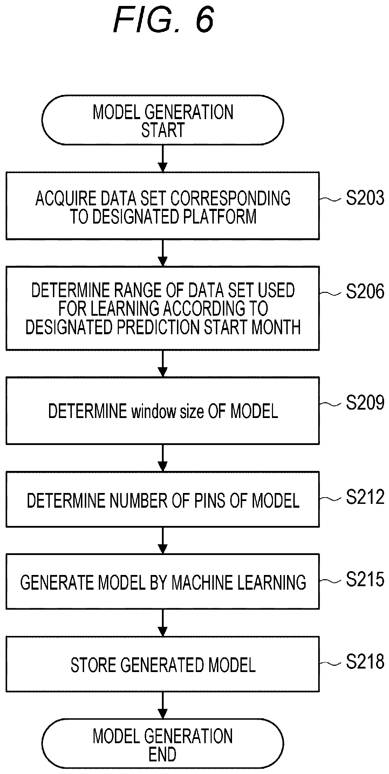

Fig. 6 is a flowchart illustrating an example of a flow of model generation processing according to the present embodiment.

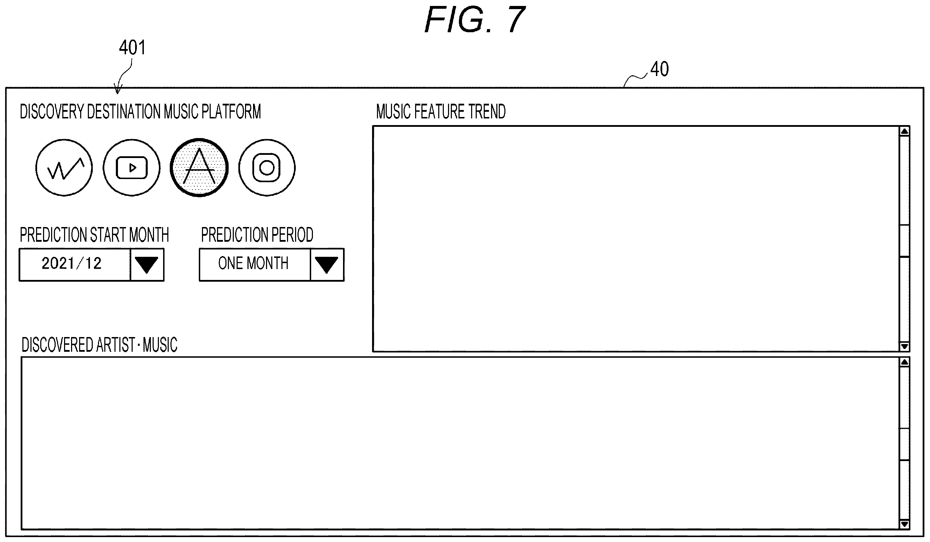

As illustrated in Fig. 6, first, the model generation unit 121 acquires a data set corresponding to the designated music platform 20 (Step S203). The designation of the music platform 20 is performed, for example, by the user. A system (or application) that realizes feature trend extraction and artist extraction according to the present embodiment is assumed to be used by a user in a position for discovering new faces in a record company, such as Artists and Repertoire (A & R) and the like. Fig. 7 is a diagram illustrating a display screen example of music platform selection and the like according to the present embodiment. A screen 40 illustrated in Fig. 7 can be displayed on the display unit 140 under the control of the display control unit 125.

As illustrated in Fig. 7, in a selection area 401 at an upper left of the screen 40, an icon corresponding to each music platform is displayed as an option of the music platform where the artist is discovered (extracted). In the present embodiment, learning (generation) of a model that predicts a distribution (frequency distribution) of future music features is performed using a data set corresponding to the music platform 20 designated here, and an artist that matches a feature trend extracted from the distribution of future music features predicted using the generated model is extracted. Furthermore, a field (entry field of month in which prediction starts and entry field of period for prediction) for designating a future period (prediction period) for predicting the distribution (frequency distribution) of the music features is displayed in the selection area 401. The user may specify any period of time. For example, in a case where the month in which the prediction is started is designated as "December 2021" and a period for prediction is designated as "one month", the distribution of the music features of December 2021 is predicted, the feature trend is extracted from the distribution, and the artist (of the music matching the trend of the music features) who is likely to become popular in December 2021 is discovered (extracted). Note that the period for prediction is not limited, and may be one month, three months, half a year, or one year. For example, in a case where the month in which the prediction is started is designated as "December 2021" and the period for prediction is designated as "3 months", the distribution of the music features from December 2021 to February 2022 is predicted, the feature trend is extracted from the distribution, and the artist (of the music matching the trend of the music features) who is likely to become popular within this period is discovered (extracted). Furthermore, in the example illustrated in Fig. 7, "month" is used to start the prediction, but may be changed to any unit such as second, minute, hour, day, or year depending on the intended use.

In addition, the user can select the period for prediction by pull-down. Furthermore, the control unit 120 according to the present embodiment may calculate an appropriate initial value of the period for prediction in advance from the data set and present the initial value to the user. More specifically, a period in which a "music feature in which a difference (distance) between a distribution of a current music feature and a distribution of a future music feature is a threshold or less" to be described later is further reduced may be calculated in advance using a data set. In addition, a period in which an average value or a maximum value of the "difference (distance) between the distribution of the current music feature and the distribution of the future music feature" of each music feature becomes larger may be calculated in advance.

Next, the model generation unit 121 determines a range of the data set used for learning according to the designated prediction start month (Step S206). More specifically, the model generation unit 121 determines which period of the data set is used for learning and how to divide the data into Train data (learning data) and Val (validation) data (verification data). The model generation unit 121 divides train and val so that cross validation (cross verification) can be performed on the time-series data. How long a period is cut out from the data set for learning may be set in advance (for example, in a case where the period for prediction is "one month", the amount of the past twelve periods (12 months) is used, and in a case where the period for prediction is "three months", the amount of the past 36 periods (36 months) is used.).

Next, the model generation unit 121 determines a window size of the model (Step S209). The window size of the model is the number of past periods used when predicting the distribution of the music feature in a certain period. As described above, the model used in the present embodiment is a time series prediction model that can predict a future distribution from a plurality of consecutive past distributions, and the "window size of the model" is the number of consecutive past distributions (the number of periods). The number of parameters (the number of periods) of the "window size" may be fixed in advance, or may be determined according to a predicted period (one month, three months, six months, etc.) (for example, "window size 3" in a case where the period for prediction is "one month", "window size 6" in a case where the period for prediction is "three months", and the like).

For example, in predicting (inferring) December 2021 with January 2021 to November 2021 as learning data, when the windows size is 3, at the learning stage, the model generation unit 121 learns the model so as to predict the distribution in April from the distribution of music features in January 2021 to March 2021, predict the distribution in May from the distribution of music features in February 2021 to April 2021, and ⋯ predict the distribution in November 2021 from the distribution in August to October 2021. Then, at the stage of prediction (inference) to be described later, the prediction unit 122 predicts the distribution in December, 2021, which is the future (in the designated prediction period), using the learned model and the distribution in September to November, 2021.

Next, the model generation unit 121 determines the number of bins of the model (Step S212). The distribution of the music features according to the present embodiment is expressed by frequency distribution. The model generation unit 121 determines a width of the bin of the frequency distribution for each music feature. For example, for the music feature "tempo", in a case where the bin width is 10, then each section of the frequency distribution of the music feature "tempo" is delimited as 0 to 10, 10 to 20, 20 to 30, ⋯. The number of bins can be determined by the model generation unit 121 on the basis of the following logic, for example.

First, the model generation unit 121 selects a music feature for determining the number of bins, and acquires a distribution of the music feature in the entire period or the latest period included in the data set. For example, when January 2021 to November 2021 are set as learning data (when determined as the range of the data set), the distribution of each music feature is obtained for all popular songs from January 2021 to November 2021 in the case of considering in the entire period. Furthermore, in the case of considering in the latest period, the distribution of each music feature is obtained for the popular song of November 2021. Next, for the acquired distribution of each music feature, the number of bins is determined using an estimator utilizing the Freedman Diaconis' law and a function (for example, the number of bins = √ data set size) that determines the number of bins according to the size of the data set. Then, a bin width calculated by the determined number of bins is checked, and in a case where the bin width is extremely small, the number of bins is changed to a predetermined minimum number of bins.

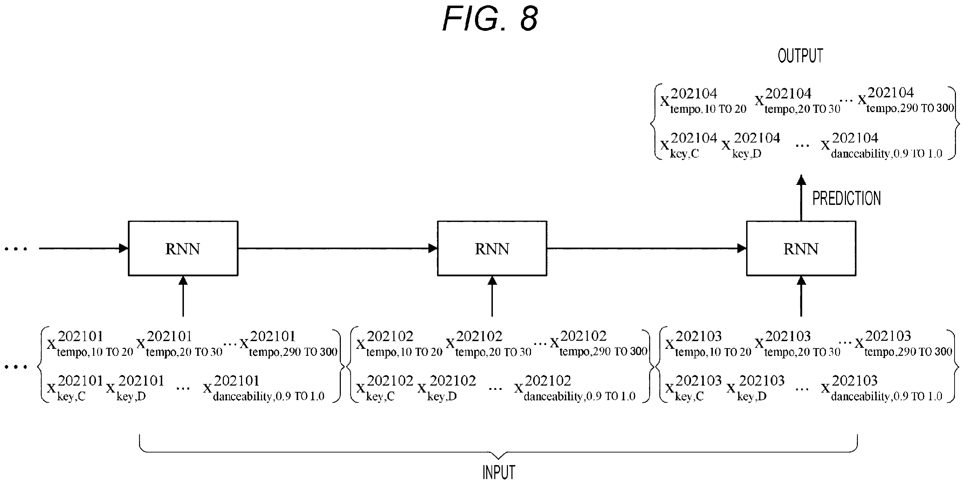

Next, the model generation unit 121 generates a model by machine learning (Step S215). Specifically, the model generation unit 121 generates the time series prediction model of the distribution of the music features using the prescribed machine learning. Note that the time series prediction model of the distribution of the music features may be generated for each music feature, or a time series prediction model that can learn all the music features in a connected manner and input and output all the music features in the connected manner may be generated. The determination of the number of bins is made for each music feature. Fig. 8 is a diagram illustrating an example of generation of a time-series prediction model that performs input and output all the music features in a connected manner.

In Fig. 8, as each music feature mf in a certain period t, a section of the music feature amount is fr, and the number of distributions of bins of the frequency distribution (corresponding to a height of each bin) is represented by the following value 1.

[Expression 1]

$$x^{t}_{mf,fr} \quad \text{... Value 1}$$

For example, the number of distributions in a section of 10 to 20 of the tempo in January 2021 can be expressed by the following value 2.

[Expression 2]

$$x^{202101}_{tempo,10\sim20} \quad \text{... Value 2}$$

Then, for example, when a distribution of music features in April 2021 is predicted by a window size 3 (learning phase) by a recurrent neural network (RNN), as illustrated in Fig. 8, a model is learned (generated) such that data to which the number of distributions in each section of all music features in January 2021 is connected, data to which the number of distributions in each section of all music features in February 2021 is connected, and data to which the number of distributions in each section of all music features in March 2021 is connected are input to the RNN, and data to which the number of distributions in each section of all music features in April 2021 is connected is output (predicted).

Although the model generation using machine learning has been specifically described above, the above content is an example, and the present disclosure is not limited thereto.

Then, the model generation unit 121 stores the learned model in the storage unit 150 (Step S218).

The model generation processing for predicting the distribution of the future music features has been specifically described above.

(3-3. Prediction processing of distribution of future music feature)

The prediction unit 122 predicts the distribution of the future music feature using the model (learned model) generated by the model generation unit 121. For example, in a case where January 2021 to November 2021 are set as the learning data, the month in which the prediction is started is December 2021, the prediction period is one month, and the window size is 3, the prediction unit 122 inputs the distribution of each music feature in each period of September to November 2021 to the learned model, and predicts (outputs) the distribution of each music feature in December 2021.

Furthermore, in a case where the month in which the prediction is started is December 2021 and the prediction period is three months, the prediction unit 122 first inputs the distribution of each music feature in each period of September to November 2021 to the learned model, and predicts the distribution of each music feature in December 2021. Next, the prediction unit 122 inputs the distribution of each music feature in October and November 2021 and the predicted distribution of each music feature in December 2021, and predicts January 2022. Subsequently, similarly, the prediction unit 122 predicts the distribution in February 2022 using the distributions in November, December, 2021 and January, 2022 as inputs. In this way, the prediction unit 122 can obtain the distribution of each music feature of December 2021, January and February 2022.

The obtained distribution of each music feature (of the prediction period) in the future can be stored in the storage unit 150.

(3-4. Feature trend extraction processing)

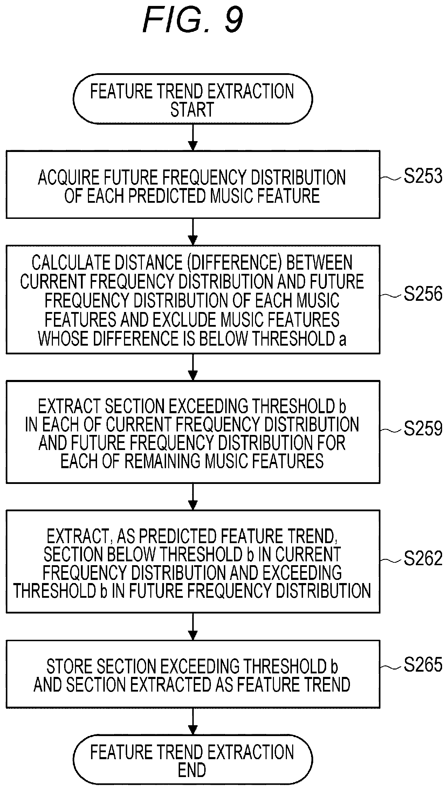

Fig. 9 is a flowchart illustrating an example of a flow of feature trend extraction processing.

As illustrated in Fig. 9, first, the feature trend extraction unit 123 acquires a future distribution (frequency distribution) of each predicted music feature (from the storage unit 150) (Step S253).

Next, the feature trend extraction unit 123 calculates a distance (difference) between the current frequency distribution and the future frequency distribution of each music feature, and excludes music features whose difference is below a threshold a (Step S256).

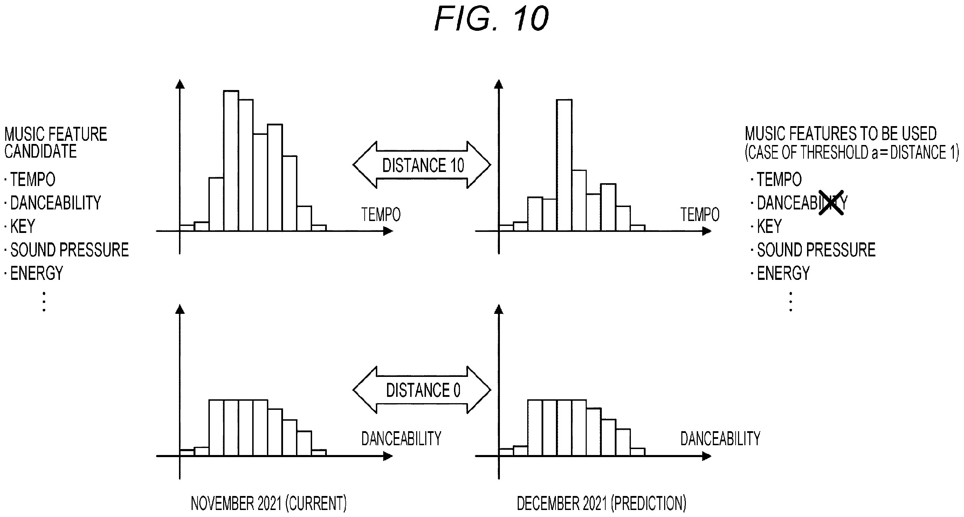

With removal of the music features having no difference, a burden of the feature trend extraction processing can be reduced. In other words, since there is a high possibility that a music feature having no difference between the current distribution and the future distribution (the difference is equal to or less than the threshold) cannot be extracted as a feature trend (is not used for artist extraction), the music feature is excluded at this stage so that the burden of extraction processing to be described later can be reduced. In the calculation of the difference (distance) in the distribution, the difference in the number of distributions in the frequency distribution may be simply calculated, or a distance scale (Kullback Liebler distance, Pearson distance, relative PE distance, $L^2$ distance (Euclidean distance), and the like) of the probability distribution may be used. Fig. 10 is a diagram illustrating exclusion of music features having no difference. As illustrated in Fig. 10, for example, in a case where the present is November 2021 and the predicted future is December 2021, a difference (distance) between the present and future frequency distributions is calculated for each music feature by various calculation methods, and a music feature ("danceability" in the example illustrated in Fig. 10) whose distance is below the threshold a (for example, in a case where the threshold a is distance 1) is excluded from the music feature to be used.

Next, for each remaining music feature (each music feature to be used), the feature trend extraction unit 123 extracts a section exceeding a threshold b in each of the current frequency distribution and the future frequency distribution (Step S259). When the frequency distribution of each analyzed music feature is presented to the user, it is difficult to understand if numerical values of all sections of each distribution are presented as they are. Therefore, a portion exceeding the certain threshold b (trend threshold) is presented as a popular section. The threshold b may be appropriately set for each music feature. The threshold b may be set as follows, for example.

First, the feature trend extraction unit 123 sets an initial value to the threshold b. Next, the feature trend extraction unit 123 extracts all pairs of distribution sets of two temporally adjacent periods in the learning data. For example, when January 2021 to November 2021 are set as learning data, pairs of "January, February 2021", "February, March 2021", ··· "October 2021, November" are extracted. Then, the feature trend extraction unit 123 repeats adopting an initial value when a section (section below the threshold b in the current distribution and above the threshold b in the future distribution) extracted as a feature trend in all pairs is, for example, 1 or 2, and changing the initial value in a case where the section is 0 or 3 or more.

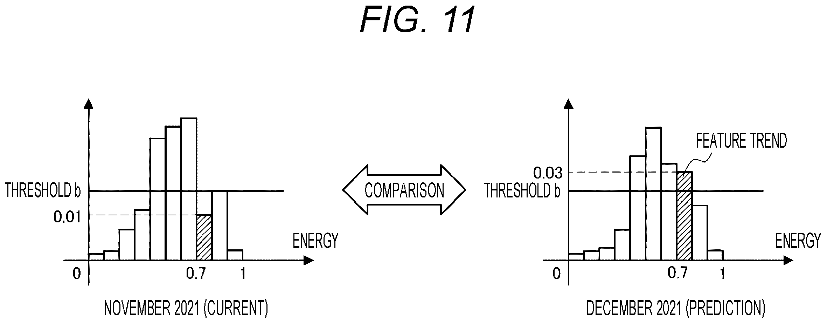

Next, the feature trend extraction unit 123 extracts, as a feature trend, a section in which (the number of distributions) falls below the threshold b in the current frequency distribution and (the number of distributions) exceeds the threshold b in the future frequency distribution (Step S262). The feature trend extraction unit 123 extracts a section of the feature trend for each music feature. Fig. 11 is a diagram illustrating extraction of the feature trend according to the present embodiment. As illustrated in Fig. 11, for example, in the current distribution and the future predicted distribution of the music feature being energy, a section "70 to 80" in which the number of distributions is lower than the threshold b in the current distribution and higher than the threshold b in the future predicted distribution is extracted as a trend (feature trend) of the music feature being energy.

Then, the feature trend extraction unit 123 stores a section exceeding the threshold b and a section extracted as a feature trend in the storage unit 150 (Step S265).

The feature trend extraction processing has been specifically described above.

(3-5. Artist extraction processing)

Fig. 12 is a flowchart illustrating an example of a flow of artist extraction processing according to the present embodiment.

As illustrated in Fig. 12, first, the artist extraction unit 124 acquires a trend (feature trend) of each music feature from the storage unit 150 (Step S303).

Next, the artist extraction unit 124 extracts music matching some feature trends from the designated music platform 20 (Step S306). Among the music features, how many music features are used can be appropriately set. In addition, which music feature is used can be appropriately set. For example, when three music features are used, top three music features ranked in the order of the distance (difference) between the current and future distributions may be used. Furthermore, the artist extraction unit 124 may extract music that matches at least one feature trend without being limited to music that matches all the feature trends to be used. A large number of matched pieces of music can be extracted.

Next, the artist extraction unit 124 extracts an artist who has produced the extracted music (from the designated music platform 20) (Step S309). Note that although "produced" is described here, the artist may be associated with the music without being limited to the production. A large number of artists can be extracted.

Subsequently, it is determined whether or not the degree of recognition of each extracted artist is equal to or less than a certain value (Step S312). This is because an artist whose degree of recognition exceeds a certain value is highly likely to be an artist who has already sold well (a popular one that has attracted attention), and is excluded from the artist presented to the user. The information of the degree of recognition of each artist may be obtained from the music platform 20 or may be obtained from another server. The degree of recognition is calculated on the basis of various indexes, and a calculation method thereof is not particularly limited. For example, the degree of recognition of each artist can be calculated by using information such as the total number of times of reproduction of the artist's music, the number of followers of the artist, and the number of channel registrants. Furthermore, a threshold of the degree of recognition can be set at a boundary between the artist who is selling and the artist who is not selling. Specifically, the threshold of the degree of recognition may be set to a value that separates the top 10% of the degree of recognition of the artist and the remaining 90%, for example.

Next, in a case where the degree of recognition of the artist is not equal to or less than a certain value (Step S312/No), the artist extraction unit 124 excludes the artist whose degree of recognition exceeds the certain value from the extracted artist (Step S315). This leaves an artist (for example, a new artist, a nameless artist) who is now unpopular but may in turn become popular.

Then, in order to determine the priority order at the time of presentation to the user, the artist extraction unit 124 sorts the extracted artists in descending order of possibility of increasing the popularity (degree of recognition) in the future (Step S318). The descending order of the possibility of increasing the popularity (degree of recognition) in the future is calculated on the basis of various indexes, and the calculation method is not particularly limited. For example, the artist extraction unit 124 may sort the extracted artists on the basis of the number of pieces of music or the number of music features matching the feature trend. Sorting based on the number of matched pieces of music and the number of music features may be performed using rule base or machine learning. As an example of the rule base, for example, it is conceivable to sort music in descending order of the number of pieces of music matching the feature trend or sort music in descending order of the number of music features matching the feature trend. Furthermore, as an example using machine learning, for example, a method of calculating f by performing regression such as y = f (the number of pieces of music matching the feature trend, the number of music features matching the feature trend, and the type of music features matching the feature trend) when a rate of increase in future degree of recognition from the current degree of recognition is y is considered.

The artist extraction processing has been specifically described above.

<4. Display screen example>

Next, a display screen example for presenting a feature trend and an extracted (discovered) artist according to the present embodiment will be described.

(4-1. Display of feature trend on one-dimensional grid)

The display control unit 125 may display the extracted feature trend by the numerical value (width of the trend section) or by a one-dimensional grid.

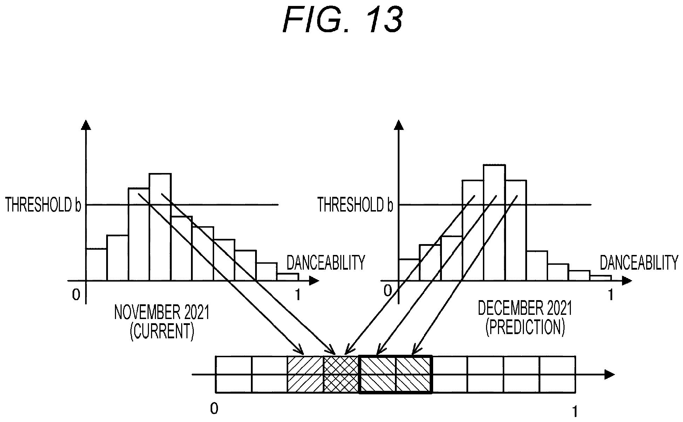

Fig. 13 is a diagram illustrating a case where a feature trend according to the present embodiment is displayed in a one-dimensional grid. As illustrated in Fig. 13, the display control unit 125 can display, on a one-dimensional grid, a section exceeding the threshold b in the current distribution (November 2021), a section exceeding the threshold b in the predicted future distribution (December 2021), and a section falling below the threshold b in the current distribution and exceeding the threshold b in the future distribution (that is, a section of the extracted feature trend). The display control unit 125 can highlight and display a section of the extracted feature trend and clearly indicate a future trend that does not overlap with the current trend. The emphasis may be a color tone, a pattern, a gradation, or a frame.

(4-2. Display of feature trend on one-dimensional grid and display of discovered artist and music)

Fig. 14 is a diagram illustrating a display screen example including the display of the feature trend on the one-dimensional grid and the display of the discovered artist and music according to the present embodiment. As illustrated in Fig. 14, the trend of each music feature is displayed in a one-dimensional grid in the display area 422 of the music feature trend displayed at an upper right of the screen 42. In addition, a numerical value of a trend section of the music feature is also displayed.

Note that the display control unit 125 may sort each music feature in descending order of the difference (distance) between the current distribution and the future distribution, and display the music features from the top in the sorted order (that is, in descending order of the distance). A large difference (distance) in the distribution is a music feature that is expected to greatly change in the future trend, and thus can be preferentially displayed. In addition, each music feature may be displayed not only in one column but also in n rows and m columns so as to be easily viewed by the user.

Furthermore, as illustrated in Fig. 14, an artist and music extracted on the basis of a trend (feature trend) of the extracted music feature are displayed in a display area 423 of the discovered artist/music displayed below the screen 42. Specifically, an artist name, a music name, a music feature amount of music, an artist description, an icon for flying to an SNS or the like of the artist, other music of the artist, and the like are displayed. In the display of the music feature amount of the music, the music feature amount matching the feature trend may be highlighted. Furthermore, in the display area 423, each extracted artist can be displayed in descending order of possibility of becoming popular (degree of recognition) in the future.

The screen display example according to the present embodiment has been described above. Note that the arrangement and display content of each display area illustrated in Fig. 14 are merely examples, and the present disclosure is not limited thereto.

<5. Modifications>

(5-1. Multidimensional display of feature Trends)

In the above-described embodiment, each feature trend is displayed one-dimensionally, but the present disclosure is not limited thereto, and may be displayed in a multidimensional manner such as two-dimensionally or three-dimensionally.

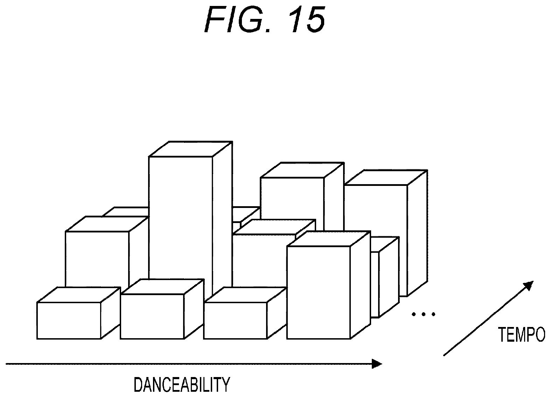

For example, in a case where the distribution of music features is represented by two types of music features (for example, "danceability" and "tempo"), a two-dimensional distribution as illustrated in Fig. 15 is assumed. Fig. 15 is a diagram illustrating an example of a distribution (two-dimensional distribution) of two types of music features according to a modification of the present embodiment. As illustrated in Fig. 15, "danceability" can be expressed in an x-axis direction, "tempo" can be expressed in a z-axis direction, and the number of distributions can be expressed in a y-axis direction.

Hereinafter, points different from the above-described one-dimensional case will be described. First, in the model generation in the model generation unit 121, in the one-dimensional case, data in which the number of distributions of each section of all music features is connected (coupled) is input (see Fig. 8), but in the case of a two-dimensional, three-dimensional, or the like multidimensional case, since a shape of the distribution is as illustrated in Fig. 15, it is difficult to input data as it is. Therefore, the model generation unit 121 may use, for example, a convolutional neural network (CNN) that matches the number of dimensions, or may develop a two-dimensional distribution one-dimensionally. Furthermore, in a case where the number of types of music features is extremely larger than the number of data, there is a possibility that the data used for learning increases exponentially. Therefore, in this case, the model generation unit 121 may reduce the dimension of the distribution of the music features using a dimension reduction algorithm that can be restored, input the distribution to the model in that state, and learn the model, and restore the prediction result to the original distribution using a restoration algorithm.

Then, the display control unit 125 displays the current distribution and the predicted future distribution on the multidimensional grid. Fig. 16 is a diagram illustrating a screen example in which each of two types of feature trends is displayed in a two-dimensional grid according to a modification of the present embodiment. As illustrated in Fig. 16, in a display area 432 of the music feature trend displayed at the upper right of the screen 43, arbitrary two types of feature trends are displayed in a two-dimensional grid. As illustrated in Fig. 16, also in the case of the two-dimensional grid, the display control unit 125 can display, on the two-dimensional grid, a section (for example, tempo 150 to 210 and danceability 0.3 to 0.5, tempo 180 to 210 and danceability 0.5 to 0.7, and the like) in which a value exceeds the threshold b in the current distribution (November 2021), a section (for example, the tempo 150 to 210 and the danceability 0.5 to 0.7) in which the value exceeds the threshold b in the predicted future distribution (December 2021), and a section (that is, a section of the extracted feature trend) in which the value falls below the threshold b in the current distribution and the value exceeds the threshold b in the future distribution (for example, the tempo 150 to 180 and the danceability 0.5 to 0.7). The display control unit 125 can highlight and display the section (for example, the tempo 150 to 180 and the danceability 0.5 to 0.7) of the extracted feature trend to clearly indicate a future trend that does not overlap with the current trend. The emphasis may be a color tone, a pattern, a gradation, or a frame. In addition, the display control unit 125 may also display the numerical values of the feature trend sections.

Furthermore, the display control unit 125 may sort arbitrary pairs of respective music features in descending order of the difference between the current and future distributions, and display the pairs from the top in the sorted order (that is, in descending order of the difference).

In addition, since the distribution or grid of three-dimensional or multi-dimensional music features can be aggregated two-dimensionally or three-dimensionally, the display control unit 125 can perform aggregation according to the number of dimensions (types of music features) desired to be displayed as appropriate. For example, in a case of handling a four-dimensional (tempo, danceability, energy, and liveness) music feature distribution, in a case where it is desired to display two dimensions of tempo and danceability, the display control unit 125 aggregates the distribution and the grid such that axes of energy and a liveness disappear. In addition, the order of display of the distribution (order of sorting) is similarly conceivable. Specifically, in a case where it is desired to display two dimensions from four dimensions, the display control unit 125 calculates and sorts a difference (distance) between a current distribution and a future distribution in the two-dimensional distribution for each 4C2 feature pair. Here, with respect to the processing of removing the music features having no difference, all the music features may be aggregated one-dimensionally, and then the processing of determining whether or not to remove each music feature one by one (whether or not the difference falls below the threshold a) may be determined by the display control unit 125.

(5-2. Additional function)

Subsequently, an additional function will be proposed. In the trend extraction system (application) according to the present embodiment, for example, the user may be allowed to arbitrarily select a music feature to be used for extracting (discovering) an artist. Furthermore, the trend extraction system (application) according to the present embodiment may present music corresponding to a location arbitrarily designated by the user on a grid on which a feature trend is displayed, for example.

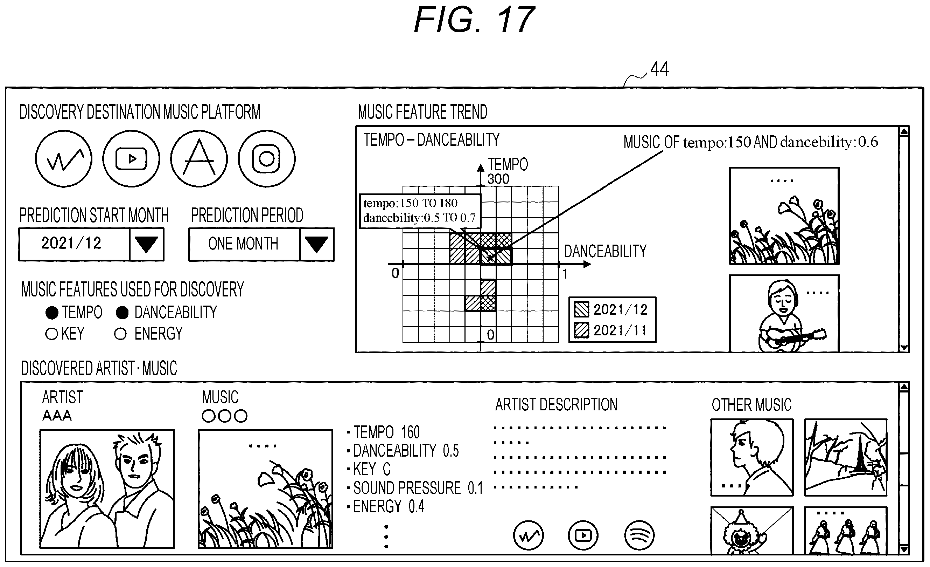

An example of a screen having such an additional function is illustrated in Fig. 17. As illustrated in Fig. 17, an area for selecting a music feature to be used for discovery is displayed on the screen 44, and the user can select an arbitrary music feature. Furthermore, the user designates an arbitrary location in the area indicating the trend of the music feature of the screen 44, and then music corresponding to the music feature of the designated location is presented. This makes it possible to assist the user's understanding of the music features. In the example illustrated in Fig. 17, since the user instructs the vicinity of the tempo of 150 and the danceability of 0.6, some pieces of music corresponding to the music feature amount are presented.

(5-3. Modification of feature trend)

In the above-described embodiment, it has been described that an example of the predetermined condition is a section in which a value is lower than the threshold in the frequency distribution in the current period and the value is higher than the threshold in the (predicted future) frequency distribution in the prediction period (see Fig. 11), but the present disclosure is not limited thereto. For example, the section that satisfies the predetermined condition according to the present disclosure may be a section in which a difference between a current value and a prediction period (predicted future) value exceeds a prescribed threshold.

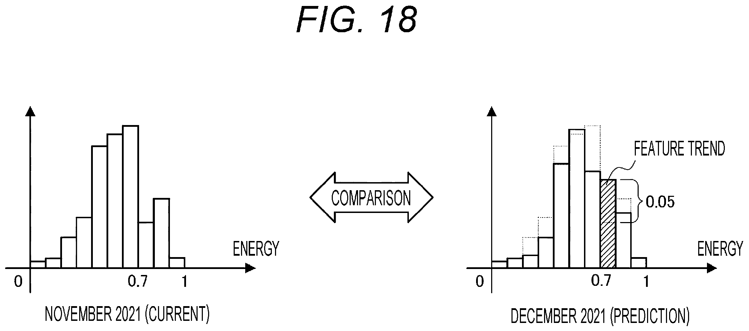

Fig. 18 is a diagram illustrating extraction of a feature trend according to the modification of the present embodiment. As illustrated in Fig. 18, for example, in the current frequency distribution and the future frequency distribution of the music feature: energy, the difference between the current value and the future value in each section is calculated. For example, in a case where the prescribed threshold is 0.03 and the difference between the current value and the future value in the section "70 to 80" among the sections of the frequency distribution is 0.05, the feature trend extraction unit 123 extracts the section as a feature trend since the difference exceeds the threshold. As described above, the feature trend extraction unit 123 extracts, as the feature trend, a section in which the difference exceeds the prescribed threshold, and does not extract, as the feature trend, a section in which the difference does not exceed the prescribed threshold (including a case where the difference is negative).

Furthermore, the feature trend extraction unit 123 may extract, as the feature trend, a case where both the condition described with reference to Fig. 11 and the condition according to the present modification are satisfied. That is, the feature trend extraction unit 123 may extract, as the feature trend, a section in which a difference between a current value and a future value exceeds a second threshold (the prescribed threshold) among sections in which a value is lower than the first threshold in the current distribution and the value is higher than the first threshold in the future distribution.

(5-4. Modification of feature trend display)

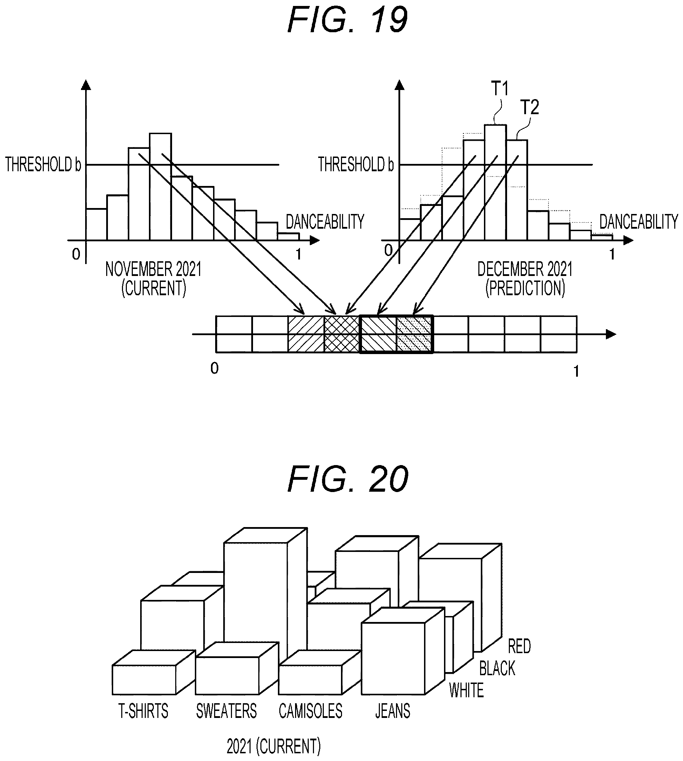

Next, a modification of the display of the feature trend will be described with reference to Fig. 19. Fig. 19 is a diagram illustrating a modification of display of the feature trend according to the present embodiment.

In the example illustrated in Fig. 19, a section (for example, sections T1 and T2 illustrated in Fig. 19) having a value lower than the first threshold (threshold b) in the current distribution and having the value higher than the first threshold in the future distribution is extracted as the feature trend and displayed in a highlighted manner. Here, the display control unit 125 may further perform display control to further emphasize a section (for example, a section T2 illustrated in Fig. 19) in which the difference between the current value and the future value exceeds a second threshold (prescribed threshold) in the extracted feature trend. In the example illustrated in Fig. 19, a location corresponding to the section T2 is illustrated more densely on the one-dimensional grid. Such a one-dimensional grid may be displayed in the trend display area 422 of the trend of the music features shown in Fig. 14. As a result, when a plurality of sections is extracted as feature trends, it is possible to clearly indicate a section having a difference from the present. The emphasis may be performed by using a color tone or a pattern.

<6. Application example to other than music>

The extraction of the feature trend according to the present embodiment is not limited to music, and can be applied to various fields other than music. Here, application to some fields other than music will be described.

(6-1. Fashion)

As a first application example, fashion can be mentioned. In the case of fashion, examples of fashion features to be analyzed include the following.

· Types of clothes and accessories (T-shirts, blouses, sweaters, vests, and the like)
· Color
· Shape, silhouette (square neck, T-neck, crew-neck, etc.)
· Material (Satin, fur, etc.)
· Gender (men's, women's, kids, etc.)

In the present embodiment, a trend at a more detailed feature level rather than a large theme such as a trend for each clothing is analyzed so that the feature trend can be extracted more accurately.

In the case of fashion, extraction and presentation of trends can be performed by a method similar to that in the case of performing in multiple dimensions described above. Furthermore, fashion has strong restrictions on combinations of features. For example, when considering a combination of "clothes, shapes, materials", a combination such as "chino pan, T-neck, fur" cannot be assumed. Therefore, in the case of acquiring the multidimensional distribution of the fashion features, the distribution is not acquired for each feature, but is acquired as the multivariate distribution of the number of dimensions of the features as illustrated in Fig. 20. Fig. 20 is a diagram illustrating an example of a feature distribution in an application example to fashion according to the present embodiment. As illustrated in Fig. 20, for example, a two-dimensional distribution indicating the type of clothes in the x-axis direction, the color in the z-axis direction, and the number of distributions in the y-axis direction is acquired.

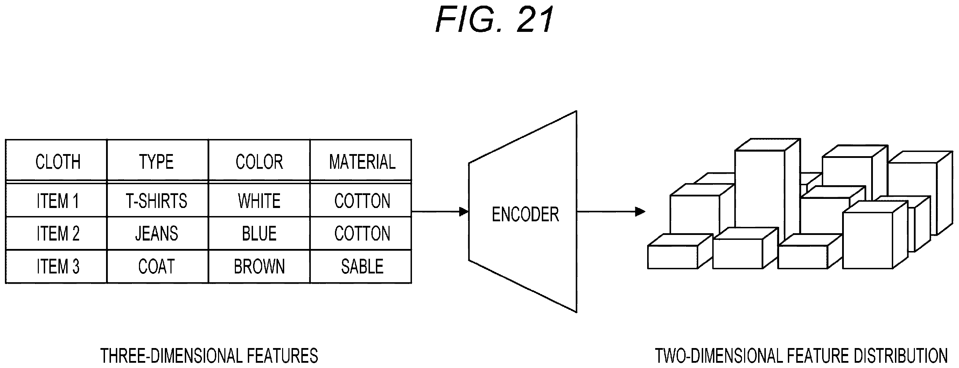

Note that, when the multivariate distribution is used, there is a possibility that data used for learning increases exponentially in a case where the number of types of features is too large compared to the number of data. At that time, as illustrated in Fig. 21, with use of a dimension reduction algorithm such as principal component analysis (PCA) or variational autoencoder (VAE) as an encoder, the distribution can be expressed with a low-dimensional distribution.

Furthermore, in the case of fashion, posted images on a designated SNS (data sharing platform) may be collected, and fashion with a large number of images in a predetermined period (that is, fashion with the number of posts equal to or greater than a threshold) may be extracted as fashion (popular content) popular in the period. An extraction destination of popular fashion is not limited to the SNS, and if the company has the sales data, the sales data can be also used.

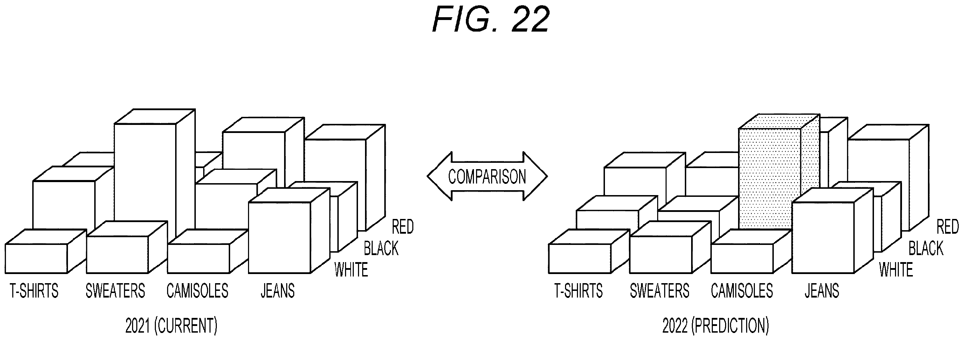

Next, when the feature distribution of the popular fashion in the designated fashion platform can be acquired in multiple dimensions, the information processing apparatus 10 generates a model using machine learning by a method similar to the time series prediction of the future feature distribution in the music field, and predicts the distribution of the future fashion feature. Thereafter, as illustrated in Fig. 22, the information processing apparatus 10 compares the current distribution with the predicted future distribution, and extracts a section (section of "camisole, black" illustrated in Fig. 22) in which the number of distributions is lower than a predetermined threshold in the current distribution but the number of distributions is higher than the predetermined threshold in the future distribution as a feature trend.

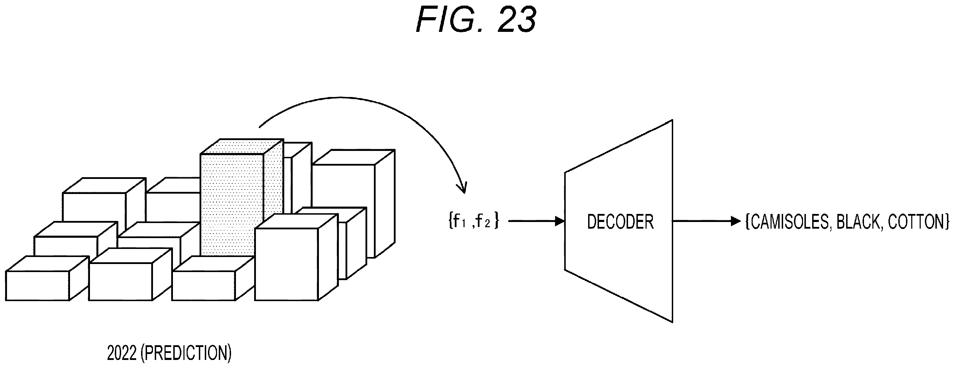

Note that, also in a case where the dimension reduction algorithm is used, the information processing apparatus 10 is only required to extract a section that is a feature trend in a similar manner. However, since the extracted feature trend cannot be presented as it is, as illustrated in Fig. 23, the extracted feature trend is restored to an original feature amount using a decoder corresponding to an encoder used at the time of dimension reduction.

Furthermore, the information processing apparatus 10 can discover a fashion that matches a combination (for example, T-shirts, white, cotton) of trends of the extracted fashion features by extracting the fashion from a posted image on a designated SNS, a company stock list, or the like.

(6-2. Design)

As a second application example, a design can be mentioned. For example, in the case of designs such as web pages, posters, book covers, and advertisements, examples of design features to be analyzed include the following.

· Ratio of background color, hue, and color
· Types and arrangement of objects, parts, and blanks
· Character font, color, and size

In the case of design, extraction and presentation of trends can be performed by the same method as in the case of performing in multiple dimensions described above. For example, a background color is white, a font of characters is Gothic, the color is black, the size is 16 pt, the size of the main image is $100 \times 100$, and the arrangement is "10, 120".

Furthermore, the information processing apparatus 10 may extract, as a popular design (popular content) for a predetermined period, a design with "the number of likes" equal to or greater than a threshold in a designated SNS or the like, a design of a web page with the number of accesses equal to or greater than a threshold, a design of an advertisement with a click rate equal to or greater than a threshold, or the like.

Furthermore, as discovery (extraction) of a design matching the trend of the extracted design features, the information processing apparatus 10 may pick up a page matching a combination of feature trends from a designated SNS, web page, or the like, or may newly generate a design of a combination of the feature trends.

(6-3. Image and sentence)

Examples of a third application include images and sentences. The examples may include unstructured information such as an image such as a photograph, a picture, or an icon, or such as a text such as a book, a script, or a catch phrase. In the case of such an image or sentence, the information processing apparatus 10 may obtain a distribution (latent variable) using a generation model such as a variational autoencoder (VAE) and a derivative model thereof (CNN-VAE, VQ (Vector Quantised) -VAE, LSTM-VAE) in order to express data (input features) used for learning as a distribution. These include two types of components of an embedding unit (encoder) in a distribution and a restoration unit (decoder) of an original input feature from the distribution, predict the distribution of the features embedded by the encoder in time series, extract a feature trend using a threshold on the predicted distribution, and restore the extracted feature trend by the decoder. This makes it possible to obtain (generate) an image and a sentence that are likely to become a trend in the future.

Furthermore, with application of the above method, the information processing apparatus 10 can not only obtain features that are likely to become a trend in the future, but also determine whether or not a new image or sentence is likely to become popular in the future by encoding the image or sentence into a future distribution.

<7. Supplement>

The preferred embodiment of the present disclosure has been described above in detail with reference to the accompanying drawings, but the present technology is not limited to such an example. It is obvious that those with ordinary skill in the technical field of the present disclosure can conceive various alterations or corrections within the scope of the technical idea recited in the claims, and it is naturally understood that these alterations or corrections also fall within the technical scope of the present disclosure.

For example, it is also possible to create one or more computer programs for causing hardware such as the CPU, the ROM, and the RAM built in the information processing apparatus 10 described above to exhibit the functions of the information processing apparatus 10. Furthermore, a computer-readable storage medium that stores the one or more computer programs is also provided.

Further, the effects disclosed in the present specification are merely illustrative or exemplary, but are not restrictive. That is, the technology according to the present disclosure may achieve other effects obvious to those skilled in the art from the description in the present specification, in addition to or instead of the effects described above.

Note that the present technology may also have the following configurations.

(1)
An information processing apparatus including a control unit that

acquires a distribution of features of a target content in a predetermined period, regarding target content,
acquires a distribution of features in a prediction period on a basis of the distribution of the features in each the predetermined period, and
compares a distribution of features in a current period with the distribution of the features in the prediction period to extract a section satisfying a predetermined condition as a feature trend in the prediction period.

(2)
The information processing apparatus according to (1) described above, in which the section satisfying the predetermined condition is a section in which a value is lower than a threshold in the distribution in the current period and the value is higher than the threshold in the distribution in the prediction period.

(3)
The information processing apparatus according to (1) or (2) described above, in which the target content is content that satisfies a condition indicating popularity.

(4)
The information processing apparatus according to (3) described above, in which the target content acquires the content that satisfies the condition indicating the popularity as the target content on a basis of data acquired from a designated data sharing platform.

(5)
The information processing apparatus according to (4) described above, in which the content is music, and
the condition indicating the popularity is a number of times of reproduction in the data sharing platform.

(6)
The information processing apparatus according to (5) described above, in which the feature is at least one of a tempo, a rhythm, a melody, a key, a beat, a length of a song, a sound pressure, danceability, energy, an acoustic degree, and a liveness of music.

(7)
The information processing apparatus according to any one of (1) to (6) described above, in which the control unit uses the distribution of the features in one or more predetermined periods as input data, and acquires the distribution of the features in the prediction period by prediction using a learned model.

(8)
The information processing apparatus according to (7) described above, in which the control unit generates the learned model used for the prediction by using prescribed machine learning with data regarding the target content satisfying the condition indicating the popularity, acquired from the designated data sharing platform, as learning data.

(9)
The information processing apparatus according to any one of (1) to (8) described above, in which the control unit performs control to display a screen indicating the feature trend in the prediction period on a display unit.

(10)

The information processing apparatus according to (9) described above, in which the screen is a screen in which the section extracted as the feature trend is highlighted on a one-dimensional grid.

(11)

The information processing apparatus according to (9) described above, in which the screen is a screen in which a section having a value higher than a threshold in the current period and a section having a value higher than the threshold in the prediction period are indicated on a one-dimensional grid, and further a section extracted as the feature trend among sections having a value higher than the threshold in the prediction period is emphasized.

(12)

The information processing apparatus according to (11) described above, in which the screen further highlights a section in which a difference between a current value and a future value exceeds a prescribed threshold among the extracted sections of the feature trend.

(13)

The information processing apparatus according to any one of (9) to (12) described above, in which the screen includes a display indicating a numerical value of a section extracted as the feature trend.

(14)

The information processing apparatus according to any one of (9) to (13) described above, in which the control unit

acquires a distribution of features in the prediction period for each feature of the target content, and

calculates, for each feature, a distance between a distribution of features in the current period and a distribution of features in the prediction period, and extracts the feature trend for each feature after excluding features whose distance is less than a threshold.

(15)

The information processing apparatus according to (14) described above, in which the screen displays each feature trend in descending order of the distance.

(16)

The information processing apparatus according to any one of (1) to (15) described above, in which the control unit extracts an artist associated with music in which at least one of the extracted feature trends matches.

(17)

The information processing apparatus according to (16) described above, in which the control unit performs control to display the extracted feature trend and the extracted artist and music.

(18)

The information processing apparatus according to any one of (1) to (17) described above, in which the control unit performs control to extract the feature trend on a basis of a distribution obtained by combining a plurality of features and display the extracted feature trend on a multi-dimensional grid.

(19)

An information processing method causing a processor to perform the steps of:

acquiring a distribution of features of a target content in a predetermined period, regarding target content;

acquiring a distribution of features in a prediction period on a basis of the distribution of the features in each the predetermined period; and

comparing a distribution of features in a current period with the distribution of the features in the prediction period to extract a section satisfying a predetermined condition as a feature trend in the prediction period.

(20)

A program causing a computer to function as a control unit that

acquires a distribution of features of a target content in a predetermined period, regarding target content;

acquires a distribution of features in a prediction period on a basis of the distribution of the features in each the predetermined period; and

compares a distribution of features in a current period with the distribution of the features in the prediction period to extract a section satisfying a predetermined condition as a feature trend in the prediction period.

REFERENCE SIGNS LIST

10    Information processing apparatus
110    Communication unit
120    Control unit
121    Model generation unit
122    Prediction unit
123    Feature trend extraction unit
124    Artist extraction unit
125    Display control unit
130    Operation unit
140    Display unit
150    Storage unit
20    Music platform
30    Network

**Claims**

1. An information processing apparatus comprising a control unit that

   acquires a distribution of features of a target content in a predetermined period, regarding target content,
   acquires a distribution of features in a prediction period on a basis of the distribution of the features in each the predetermined period, and
   compares a distribution of features in a current period with the distribution of the features in the prediction period to extract a section satisfying a predetermined condition as a feature trend in the prediction period.

2. The information processing apparatus according to claim 1,
   wherein the section satisfying the predetermined condition is a section in which a value is lower than a threshold in the distribution in the current period and the value is higher than the threshold in the distribution in the prediction period.

3. The information processing apparatus according to claim 1, wherein the target content is content that satisfies a condition indicating popularity.

4. The information processing apparatus according to claim 3, wherein the target content acquires the content that satisfies the condition indicating the popularity as the target content on a basis of data acquired from a designated data sharing platform.

5. The information processing apparatus according to claim 4,
   wherein the content is music, and
   the condition indicating the popularity is a number of times of reproduction in the data sharing platform.

6. The information processing apparatus according to claim 5,
   wherein the feature is at least one of a tempo, a rhythm, a melody, a key, a beat, a length of a song, a sound pressure, danceability, energy, an acoustic degree, and a liveness of music.

7. The information processing apparatus according to claim 1,
   wherein the control unit uses the distribution of the features in one or more predetermined periods as input data, and acquires the distribution of the features in the prediction period by prediction using a learned model.

8. The information processing apparatus according to claim 7,

wherein the control unit generates the learned model used for the prediction by using prescribed machine learning with data regarding the target content satisfying the condition indicating the popularity, acquired from the designated data sharing platform, as learning data.

9. The information processing apparatus according to claim 1,
   wherein the control unit performs control to display a screen indicating the feature trend in the prediction period on a display unit.

10. The information processing apparatus according to claim 9,
    wherein the screen is a screen in which the section extracted as the feature trend is highlighted on a one-dimensional grid.

11. The information processing apparatus according to claim 9,
    wherein the screen is a screen in which a section having a value higher than a threshold in the current period and a section having a value higher than the threshold in the prediction period are indicated on a one-dimensional grid, and further a section extracted as the feature trend among sections having a value higher than the threshold in the prediction period is emphasized.

12. The information processing apparatus according to claim 11,
    wherein the screen further highlights a section in which a difference between a current value and a future value exceeds a prescribed threshold among the extracted sections of the feature trend.

13. The information processing apparatus according to claim 9,
    wherein the screen includes a display indicating a numerical value of a section extracted as the feature trend.

14. The information processing apparatus according to claim 9,
    wherein the control unit

    acquires a distribution of features in the prediction period for each feature of the target content, and
    calculates, for each feature, a distance between a distribution of features in the current period and a distribution of features in the prediction period, and extracts the feature trend for each feature after excluding features whose distance is less than a threshold.

15. The information processing apparatus according to claim 14,
wherein the screen displays each feature trend in descending order of the distance.

16. The information processing apparatus according to claim 1,
wherein the control unit extracts an artist associated with music in which at least one of the extracted feature trends matches.

17. The information processing apparatus according to claim 16, wherein the control unit performs control to display the extracted feature trend and the extracted artist and music.

18. The information processing apparatus according to claim 1,
wherein the control unit performs control to extract the feature trend on a basis of a distribution obtained by combining a plurality of features and display the extracted feature trend on a multidimensional grid.

19. An information processing method causing a processor to perform the steps of:

acquiring a distribution of features of a target content in a predetermined period, regarding target content;
acquiring a distribution of features in a prediction period on a basis of the distribution of the features in each the predetermined period; and
comparing a distribution of features in a current period with the distribution of the features in the prediction period to extract a section satisfying a predetermined condition as a feature trend in the prediction period.

20. A program causing a computer to function as a control unit that

acquires a distribution of features of a target content in a predetermined period, regarding target content;
acquires a distribution of features in a prediction period on a basis of the distribution of the features in each the predetermined period; and
compares a distribution of features in a current period with the distribution of the features in the prediction period to extract a section satisfying a predetermined condition as a feature trend in the prediction period.

# FIG. 1

```
  ⌐20a              ⌐20b              ⌐20c
┌──────────────┐  ┌──────────────┐  ┌──────────────┐
│MUSIC PLATFORM│  │MUSIC PLATFORM│  │MUSIC PLATFORM│   ・・・
└──────────────┘  └──────────────┘  └──────────────┘
```

```
        ┌─────────────────────────┐
        │      INFORMATION        │⌐10
        │  PROCESSING APPARATUS   │
        └─────────────────────────┘
```

# FIG. 2

10: INFORMATION PROCESSING APPARATUS

CONTROL UNIT ~120

COMMUNICATION UNIT ~110

MODEL GENERATION UNIT ~121

FEATURE TREND EXTRACTION UNIT ~123

PREDICTION UNIT ~122

ARTIST EXTRACTION UNIT ~124

DISPLAY CONTROL UNIT ~125

OPERATION UNIT ~130

DISPLAY UNIT ~140

STORAGE UNIT ~150

# FIG. 3

POPULAR SONG IN PREDETERMINED PERIOD

|  | TEMPO | DANCEABILITY | KEY |
|---|---|---|---|
| MUSIC 1 | 137 | 0.3 | E |
| MUSIC 2 | 75 | 0.8 | A |
| MUSIC 3 | 160 | 0.6 | F |

FIG. 4

# FIG. 5

```
        ┌──────────────┐
        │    START     │
        └──────────────┘
                │
                ▼
   ┌─────────────────────────┐
   │║  GENERATE MODEL FOR   ║│ ∿ S103
   │║ PREDICTING DISTRIBUTION║│
   │║ OF FUTURE MUSIC FEATURES║│
   └─────────────────────────┘
                │
                ▼
   ┌─────────────────────────┐
   │  PREDICT DISTRIBUTION OF │ ∿ S106
   │   FUTURE MUSIC FEATURES  │
   └─────────────────────────┘
                │
                ▼
   ┌─────────────────────────┐
   │   STORE DISTRIBUTION OF  │ ∿ S109
   │   FUTURE MUSIC FEATURES  │
   └─────────────────────────┘
                │
                ▼
   ┌─────────────────────────┐
   │║  EXTRACT FEATURE TREND ║│ ∿ S112
   └─────────────────────────┘
                │
                ▼
   ┌─────────────────────────┐
   │║ EXTRACT ARTIST BASED ON║│ ∿ S115
   │║     FEATURE TREND      ║│
   └─────────────────────────┘
                │
                ▼
   ┌─────────────────────────┐
   │    DISPLAY PROCESSING    │ ∿ S118
   └─────────────────────────┘
                │
                ▼
        ┌──────────────┐
        │     END      │
        └──────────────┘
```

# FIG. 6

```
        ┌─────────────────────────┐
        │   MODEL GENERATION      │
        │        START            │
        └─────────────────────────┘
                    │
                    ▼
        ┌─────────────────────────┐
        │ ACQUIRE DATA SET        │──── S203
        │ CORRESPONDING           │
        │ TO DESIGNATED PLATFORM  │
        └─────────────────────────┘
                    │
                    ▼
        ┌─────────────────────────┐
        │ DETERMINE RANGE OF      │──── S206
        │ DATA SET USED FOR       │
        │ LEARNING ACCORDING TO   │
        │ DESIGNATED PREDICTION   │
        │ START MONTH             │
        └─────────────────────────┘
                    │
                    ▼
        ┌─────────────────────────┐
        │ DETERMINE window size   │──── S209
        │ OF MODEL                │
        └─────────────────────────┘
                    │
                    ▼
        ┌─────────────────────────┐
        │ DETERMINE NUMBER OF     │──── S212
        │ PINS OF MODEL           │
        └─────────────────────────┘
                    │
                    ▼
        ┌─────────────────────────┐
        │ GENERATE MODEL BY       │──── S215
        │ MACHINE LEARNING        │
        └─────────────────────────┘
                    │
                    ▼
        ┌─────────────────────────┐
        │ STORE GENERATED MODEL   │──── S218
        └─────────────────────────┘
                    │
                    ▼
        ┌─────────────────────────┐
        │   MODEL GENERATION      │
        │        END              │
        └─────────────────────────┘
```

*FIG. 7*

DISCOVERY DESTINATION MUSIC PLATFORM

MUSIC FEATURE TREND

PREDICTION START MONTH
2021/12 ▼

PREDICTION PERIOD
ONE MONTH ▼

DISCOVERED ARTIST·MUSIC

EP 4 459 538 A1

## FIG. 8

OUTPUT

$$\left\{ \begin{array}{l} X^{202104}_{tempo,10\ TO\ 20} \quad X^{202104}_{tempo,20\ TO\ 30} \cdots X^{202104}_{tempo,290\ TO\ 300} \\ \\ X^{202104}_{key,C} \quad X^{202104}_{key,D} \quad \cdots \quad X^{202104}_{danceability,0.9\ TO\ 1.0} \end{array} \right\}$$

PREDICTION

RNN

$$\left\{ \begin{array}{l} X^{202101}_{tempo,10\ TO\ 20} \quad X^{202101}_{tempo,20\ TO\ 30} \cdots X^{202101}_{tempo,290\ TO\ 300} \\ \\ X^{202101}_{key,C} \quad X^{202101}_{key,D} \quad \cdots \quad X^{202101}_{danceability,0.9\ TO\ 1.0} \end{array} \right\}$$

$$\left\{ \begin{array}{l} X^{202102}_{tempo,10\ TO\ 20} \quad X^{202102}_{tempo,20\ TO\ 30} \cdots X^{202102}_{tempo,290\ TO\ 300} \\ \\ X^{202102}_{key,C} \quad X^{202102}_{key,D} \quad \cdots \quad X^{202102}_{danceability,0.9\ TO\ 1.0} \end{array} \right\}$$

$$\left\{ \begin{array}{l} X^{202103}_{tempo,10\ TO\ 20} \quad X^{202103}_{tempo,20\ TO\ 30} \cdots X^{202103}_{tempo,290\ TO\ 300} \\ \\ X^{202103}_{key,C} \quad X^{202103}_{key,D} \quad \cdots \quad X^{202103}_{danceability,0.9\ TO\ 1.0} \end{array} \right\}$$

INPUT

# FIG. 9

FEATURE TREND EXTRACTION
START

ACQUIRE FUTURE FREQUENCY DISTRIBUTION
OF EACH PREDICTED MUSIC FEATURE — S253

CALCULATE DISTANCE (DIFFERENCE) BETWEEN
CURRENT FREQUENCY DISTRIBUTION AND FUTURE
FREQUENCY DISTRIBUTION OF EACH MUSIC
FEATURES AND EXCLUDE MUSIC FEATURES
WHOSE DIFFERENCE IS BELOW THRESHOLD a — S256

EXTRACT SECTION EXCEEDING THRESHOLD b
IN EACH OF CURRENT FREQUENCY DISTRIBUTION
AND FUTURE FREQUENCY DISTRIBUTION FOR
EACH OF REMAINING MUSIC FEATURES — S259

EXTRACT, AS PREDICTED FEATURE TREND,
SECTION BELOW THRESHOLD b IN CURRENT
FREQUENCY DISTRIBUTION AND EXCEEDING
THRESHOLD b IN FUTURE FREQUENCY DISTRIBUTION — S262

STORE SECTION EXCEEDING THRESHOLD b
AND SECTION EXTRACTED AS FEATURE TREND — S265

FEATURE TREND EXTRACTION
END

# FIG. 10

MUSIC FEATURE
CANDIDATE

· TEMPO
· DANCEABILITY
· KEY
· SOUND PRESSURE
· ENERGY

   ⋮

DISTANCE 10

TEMPO

TEMPO

MUSIC FEATURES TO BE USED
(CASE OF THRESHOLD a = DISTANCE 1)

· TEMPO
· DANCEABILITY ✕
· KEY
· SOUND PRESSURE
· ENERGY

   ⋮

DISTANCE 0

DANCEABILITY

DANCEABILITY

NOVEMBER 2021 (CURRENT)

DECEMBER 2021 (PREDICTION)

EP 4 459 538 A1

# FIG. 11

NOVEMBER 2021 (CURRENT)

COMPARISON

DECEMBER 2021 (PREDICTION)

EP 4 459 538 A1

# FIG. 12

```
       ┌─────────────────────────┐
       │   ARTIST EXTRACTION     │
       │        START            │
       └─────────────────────────┘
                    │
                    ▼
       ┌─────────────────────────┐
       │   ACQUIRE FEATURE TREND │ ～S303
       │   OF EACH MUSIC FEATURE │
       └─────────────────────────┘
                    │
                    ▼
       ┌─────────────────────────┐
       │   EXTRACT MUSIC MATCHING│
       │   SOME FEATURE TRENDS   │ ～S306
       │   FROM MUSIC PLATFORM   │
       └─────────────────────────┘
                    │
                    ▼
       ┌─────────────────────────┐
       │   EXTRACT ARTIST PRODUCING│ ～S309
       │   EXTRACTED MUSIC       │
       └─────────────────────────┘
                    │            ～S312
                    ▼
       ╱─────────────────────────╲         NO
      ╱   IS THE DEGREE OF RECOGNITION╲──────────────┐
      ╲   OF ARTIST EQUAL TO OR LESS ╱               │     ～S315
       ╲   THAN CERTAIN VALUE?      ╱                ▼
        ╲─────────────────────────╱      ┌─────────────────────────┐
                    │                     │   EXCLUDE ARTIST WHOSE  │
                   YES                    │   DEGREE OF RECOGNITION │
                    │                     │   EXCEEDS CERTAIN VALUE │
                    │                     └─────────────────────────┘
                    │◄──────────────────────────────┘
                    ▼
       ┌─────────────────────────────┐
       │ SORT ARTISTS IN DESCENDING ORDER│ ～S318
       │ OF POSSIBILITY OF INCREASING│
       │ POPULARITY IN FUTURE        │
       └─────────────────────────────┘
                    │
                    ▼
       ┌─────────────────────────┐
       │   ARTIST EXTRACTION     │
       │        END              │
       └─────────────────────────┘
```

# FIG. 13

# FIG. 14

DISCOVERY DESTINATION MUSIC PLATFORM

PREDICTION START MONTH
2021/12 ▼

PREDICTION PERIOD
ONE MONTH ▼

MUSIC FEATURE TREND 422

DANCEABILITY

trend
DANCEABILITY:0.4 TO 0.6

0 — 1

⊠ 2021/12 (PREDICTION)
⊠ 2021/11 (CURRENT)

SOUND PRESSURE

trend
SOUND PRESSURE:0.0 TO 02

0 — 1

⊠ 2021/12 (PREDICTION)
⊠ 2021/11 (CURRENT)

DISCOVERED ARTIST·MUSIC 423

ARTIST
AAA

MUSIC
○○○

・TEMPO 160
・DANCEABILITY 0.5
・KEY C
・SOUND PRESSURE 0.1
・ENERGY 0.4

ARTIST DESCRIPTION

OTHER MUSIC

42

EP 4 459 538 A1

# FIG. 15

DANCEABILITY

TEMPO

## FIG. 16

EP 4 459 538 A1

# FIG. 17

~44

**DISCOVERY DESTINATION MUSIC PLATFORM**

**PREDICTION START MONTH**
2021/12 ▼

**PREDICTION PERIOD**
ONE MONTH ▼

**MUSIC FEATURES USED FOR DISCOVERY**
● TEMPO ● DANCEABILITY
○ KEY ○ ENERGY

**MUSIC FEATURE TREND**

TEMPO – DANCEABILITY

MUSIC OF tempo:150 AND dancebility:0.6

TEMPO
300

tempo:150 TO 180
dancebility:0.5 TO 0.7

DANCEABILITY

0     1

0

▨ 2021/12
▨ 2021/11

....

....

**DISCOVERED ARTIST · MUSIC**

| ARTIST | MUSIC | | ARTIST DESCRIPTION | OTHER MUSIC |
|---|---|---|---|---|
| AAA | ○○○ | | | |

····
· TEMPO 160
· DANCEABILITY 0.5
· KEY C
· SOUND PRESSURE 0.1
· ENERGY 0.4
⋮

ARTIST DESCRIPTION
·······················
··········
·······················
·······················
···········

OTHER MUSIC
····

EP 4 459 538 A1

EP 4 459 538 A1

## FIG. 18

COMPARISON

NOVEMBER 2021 (CURRENT)

DECEMBER 2021 (PREDICTION)

ENERGY

ENERGY

FEATURE TREND

0.05

0

0.7

1

0

0.7

1

# FIG. 19

# FIG. 20

## FIG. 21

| CLOTH | TYPE | COLOR | MATERIAL |
|-------|------|-------|----------|
| ITEM 1 | T-SHIRTS | WHITE | COTTON |
| ITEM 2 | JEANS | BLUE | COTTON |
| ITEM 3 | COAT | BROWN | SABLE |

ENCODER

THREE-DIMENSIONAL FEATURES

TWO-DIMENSIONAL FEATURE DISTRIBUTION

EP 4 459 538 A1

# FIG. 22

2021 (CURRENT)

T-SHIRTS  SWEATERS  CAMISOLES  JEANS

WHITE
BLACK
RED

COMPARISON

2022 (PREDICTION)

T-SHIRTS  SWEATERS  CAMISOLES  JEANS

WHITE
BLACK
RED

# FIG. 23

2022 (PREDICTION)

$\{f_1, f_2\} \longrightarrow$ DECODER $\longrightarrow$ {CAMISOLES, BLACK, COTTON}

EP 4 459 538 A1

## INTERNATIONAL SEARCH REPORT

| International application No. |
|---|
| **PCT/JP2022/041310** |

| A. | CLASSIFICATION OF SUBJECT MATTER |
|---|---|

*G06Q 50/10*(2012.01)i; *G06Q 30/0201*(2023.01)i
FI:  G06Q50/10; G06Q30/0201

According to International Patent Classification (IPC) or to both national classification and IPC

| B. | FIELDS SEARCHED |
|---|---|

Minimum documentation searched (classification system followed by classification symbols)
G06Q10/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2013-33375 A (SONY CORP.) 14 February 2013 (2013-02-14)<br>entire text, all drawings | 1–20 |
| A | KR 10-2016-0116356 A (INDUSTRY-ACADEMIC COOP. FOUNDATION, YONSEI UNIVERSITY) 10 October 2016 (2016-10-10)<br>entire text, all drawings | 1–20 |
| A | 株式会社ＮＴＴデータ,株式会社ＮＴＴデータ経営研究所,株式会社阪神コンテンツリンク,脳科学とＡＩで音楽トレンドを可視化,未来のヒットソング予測に成功. [online], NTT Data Institute of Management Consulting, Inc., 29 November 2021, pp. 1-4, [retrieved on 12 January 2023], Internet: <URL: https://web.archive.org/web/20211129022403/https://nttdata.com/jp/ja/news/release/2020/090300>, (NTT DATA CORPORATION, NTT DATA INSTITUTE OF MANAGEMENT CONSULTING, INC., HANSHIN CONTENTS LINK CORPORATION), non-official translation (Using Neuroscience and AI to Visualize Music Trends, Successfully Predict Hit Songs.)<br>entire text, all drawings | 1–20 |

☑ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **12 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 459 538 A1

**INTERNATIONAL SEARCH REPORT**

International application No.

**PCT/JP2022/041310**

**C.    DOCUMENTS CONSIDERED TO BE RELEVANT**

| Category* | Citation of document, with indication, where appropriate, of the relevant passages | Relevant to claim No. |
|---|---|---|
| T | 河村和紀,宇田川拓麻,吉田将大,舘野啓. 楽曲特徴に基づく音楽トレンド予測およびアーティスト発掘. 情報処理学会第84回全国大会講演論文集. Information Processing Society of Japan, 03 March 2022, pp. 2-97 to 2-98, [retrieved on 12 January 2023], Internet: <URL: https://ipsj.ixsq.nii.ac.jp/ej/?action=repository_action_common_download&item_id=220796&item_no=1&attribute_id=1&file_no=1>, (KAWAMURA, Kazuki, UDAGAWA, Takuma, YOSHIDA, Masahiro, TATENO, Kei. Forecasting music trends and finding new artists based on music features. Proceedings of the 84th National Convention of IPSJ.)<br>    entire text, all drawings | 1–20 |

Form PCT/ISA/210 (second sheet) (January 2015)

INTERNATIONAL SEARCH REPORT
Information on patent family members

International application No.

**PCT/JP2022/041310**

| Patent document cited in search report | | | Publication date (day/month/year) | Patent family member(s) | | | Publication date (day/month/year) |
|---|---|---|---|---|---|---|---|
| JP | 2013-33375 | A | 14 February 2013 | US 2014/0146052 A1 entire text, all drawings WO 2013/018325 A1 | | | |
| KR | 10-2016-0116356 | A | 10 October 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012038135 A